# EUROPEAN PATENT APPLICATION

(11) **EP 4 603 554 A1**
(43) Date of publication of application: **20.08.2025**
(21) Application number: 23877055.6
(22) Date of filing: 11.09.2023
(51) Int. Cl.: C09D 183/04, B01J 13/00, C08K 3/36, C08K 5/17, C08K 9/02, C08L 71/02, C08L 83/04, C09K 3/18

(54) **EMULSION COMPOSITION OF FILM-FORMING ORGANOPOLYSILOXANE AND PRODUCTION METHOD THEREFOR**

(30) Priority: 12.10.2022 JP 2022164234
(71) Applicant: SHIN-ETSU CHEMICAL CO., LTD., Tokyo 1000005 (JP)
(72) Inventor: FUKAMACHI, Takumi, Annaka-shi, Gunma 379-0224 (JP)
(74) Representative: Schicker, Silvia
(86) International application number: PCT/JP2023/033019
(87) International publication number: WO 2024/080049

(57) **Abstract**

The present invention is a film-forming organopolysiloxane emulsion composition including: (A) organopolysiloxane represented by the following average composition formula (1), the organopolysiloxane having a viscosity at 25°C of 300,000 mPa·s or more and containing at least two alkoxy groups or hydroxy groups each bonded to a silicon atom per molecule: 100 parts by mass; (B) a cationic surfactant: 0.1 to 30 parts by mass; (C) water: 30 to 3,000 parts by mass; and (D) colloidal silica: 0.5 to 50 parts by mass. Thus, the present invention provides a film-forming organopolysiloxane emulsion composition that has favorable film formability, excellent strength and flexibility of a film after cured, and favorable storage stability. 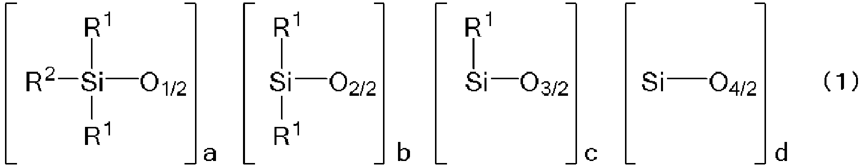 (In the formula, R¹ represents a hydrogen atom or a monovalent organic group having 1 to 20 carbon atoms; R² represents an alkyl group having 1 to 20 carbon atoms, an aryl group having 6 to 20 carbon atoms, an alkoxy group having 1 to 20 carbon atoms, or a hydroxy group.)

## Description

### TECHNICAL FIELD

The present invention relates to a film-forming organopolysiloxane emulsion composition, and a method for producing the composition.

### BACKGROUND ART

Various formulations of a silicone emulsion composition that forms a rubber film have conventionally been known, and used in various applications such as weather strip agents, coating agents, binding agents, and fiber treatment agents.

For example, there have been proposed a silicone emulsion composition consisting of hydroxylated diorganopolysiloxane, colloidal silica, and an organotin compound or organic amine compound (Patent Document 1), a silicone emulsion composition consisting of hydroxy group-containing organopolysiloxane, Si-H group-containing organopolysiloxane, colloidal silica, silane containing an amide group and a carboxyl group, epoxy group-containing silane, and a curing catalyst (Patent Document 2), a silicone emulsion composition consisting of alkenyl group-containing organopolysiloxane, Si-H group-containing organopolysiloxane, colloidal silica, a reaction product of amino silane with an acid anhydride, epoxy silane, and an addition reaction catalyst (Patent Document 3), a silicone emulsion composition consisting of hydrogen siloxane with a molecular terminal blocked with a hydroxyl group, an emulsifying agent, water, and a curing catalyst (Patent Document 4), a silicone emulsion composition consisting of colloidal silica-silicone core-shell, a curing catalyst, an emulsifying agent, and water (Patent Documents 5 to 7), a silicone emulsion composition consisting of hydroxy group-containing organopolysiloxane, colloidal silica, silane containing an amide group and a carboxyl group, epoxy group-containing silane, a curing catalyst, and a photocatalytic oxide (Patent Document 8), a silicone emulsion composition consisting of hydroxy group-containing organopolysiloxane, colloidal silica, silane containing an amide group and a carboxyl group, and epoxy group-containing silane (Patent Document 9), etc.

Moreover, organopolysiloxane is capable of imparting flexibility and lubricity to various types of fibers or fiber products, so that a silicone emulsion composition that forms a rubber film is also used as a fiber treatment agent.

As a method for producing such silicone emulsion composition that forms a rubber film, a method of emulsion polymerization using strong acid or strong base has been known, wherein a cyclic siloxane oligomer or organopolysiloxane with a terminal blocked with a silanol group is used as an emulsified raw material.

When an anionic surfactant having strong catalytic action is used as a surfactant, polymerization reaction quickly occurs. Thus, research has been conducted for a long time and many methods have been proposed. However, emulsion prepared by emulsion polymerization using an anionic surfactant is incompatible with cationic emulsion and chemical agents widely used particularly in fiber treatment, hair cosmetics, etc**.,** and blending thereof leads to decreased stability and also causes problems such as limited conditions for use or blending.

Meanwhile, when a common cationic surfactant as typified by cetyltrimethylammonium chloride and tallow trimethylammonium chloride is used as a surfactant, a polymerization rate is extremely slow due to its weak catalytic action, and it is difficult to obtain silicone emulsion with a high degree of polymerization sufficient to form a rubber film.

Patent Document 10 has proposed that organopolysiloxane with a terminal blocked with a silanol group is emulsified using an extremely hydrophobic trialkylmethyl type of a cationic surfactant, and an alkyltrimethyl type of a cationic surfactant (in some cases, containing a nonionic surfactant) in combination, followed by addition of an alkaline catalyst and polymerization, thereby obtaining organopolysiloxane emulsion with a high degree of polymerization sufficient to form a film in less time than before. However, problems of a cured film of the above composition have been pointed out, such as soft hardness and low strength of the film. Additionally, there is a problem that this emulsion will separate within three months. The organopolysiloxane in this emulsion has the high degree of polymerization sufficient to form a film. Therefore, it is impossible to stably disperse the separated emulsion again even by high shear stirring, which makes the industrial use thereof difficult and demands to further improve long-term stability.

### CITATION LIST

### PATENT LITERATURE

Patent Document 1: JP S56-16553 A
Patent Document 2: JP H08-85760 A
Patent Document 3: JP H09-208826 A
Patent Document 4: JP H09-208900 A
Patent Document 5: JP H09-208901 A
Patent Document 6: JP H09-208902 A
Patent Document 7: JP H09-208903 A
Patent Document 8: JP 2002-363494 A
Patent Document 9: JP 2008-231276 A
Patent Document 10: JP 2021-95455 A

### SUMMARY OF INVENTION

### TECHNICAL PROBLEM

The present invention has been made in view of the above problems with the conventional techniques, and aims to provide a film-forming organopolysiloxane emulsion composition that has favorable film formability, excellent strength and flexibility of a film after cured, and favorable storage stability of the emulsion. Additionally, the present invention aims to provide a method for producing the above film-forming organopolysiloxane emulsion composition.

### SOLUTION TO PROBLEM

To achieve the above object, the present invention provides a film-forming organopolysiloxane emulsion composition including:
(A) organopolysiloxane represented by the following average composition formula (1), the organopolysiloxane having a viscosity at 25°C of 300,000 mPa·s or more and containing at least two alkoxy groups or hydroxy groups each bonded to a silicon atom per molecule: 100 parts by mass, 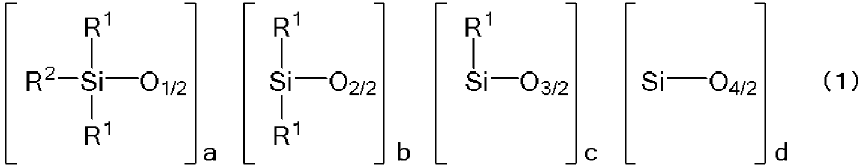 wherein R¹ each independently represents a hydrogen atom or an unsubstituted or substituted monovalent organic group having 1 to 20 carbon atoms; R² represents an unsubstituted or substituted alkyl group having 1 to 20 carbon atoms, aryl group having 6 to 20 carbon atoms, alkoxy group having 1 to 20 carbon atoms, or a hydroxy group; "a" represents an integer of 2 to 1,000, "b" represents an integer of 10 to 10,000, "c" represents an integer of 0 to 1,000, "d" represents an integer of 0 to 1,000, and c+d is an integer of 0 to 2,000 such that the viscosity of the organopolysiloxane at 25°C satisfies the range of 300,000 mPa·s or more;
(B) a cationic surfactant: 0.1 to 30 parts by mass;
(C) water: 30 to 3,000 parts by mass; and
(D) colloidal silica: 0.5 to 50 parts by mass.

The film-forming organopolysiloxane emulsion composition of the present invention has favorable film formability, excellent strength and flexibility of a film after cured, and favorable storage stability of the emulsion.

In this aspect, the (B) cationic surfactant preferably contains one or both of the following (B-1) and (B-2),
(B-1) a cationic surfactant represented by Q¹₃(CH₃)N⁺·X⁻: 0 to 30 parts by mass,
(B-2) a cationic surfactant represented by Q²_{α}(CH₃)_{4-α}N⁺·X⁻: 0 to 30 parts by mass,
   wherein Q¹ represents a same or different kind of monovalent organic group having 6 to 30 carbon atoms; Q² represents a same or different kind of monovalent organic group having 6 to 30 carbon atoms; X each independently represents a halogen atom or a monovalent carboxyl group having 1 to 6 carbon atoms; and "α" represents an integer of 1 or 2, provided that a total amount of (B-1) and (B-2) is 0.1 to 30 parts by mass.

Such emulsion composition enables better storage stability of the emulsion.

The emulsion composition of the present invention preferably further includes (E) a nonionic surfactant in an amount of 0.1 to 30 parts by mass relative to 100 parts by mass of the component (A).

Such emulsion composition can make emulsification easier since the component (E) functions to supplement emulsification performance, allowing dramatic improvement in stability of the emulsion.

In this aspect, the (E) nonionic surfactant is preferably represented by the following formula,

R³O(EO)ₚ(PO)_{q}H

wherein R³ represents a linear or branched alkyl group having 8 to 30 carbon atoms; EO represents an ethylene oxide group and PO represents a propylene oxide group, EO and PO being optionally arranged randomly or in blocks; and "p" and "q" each independently represents an integer of 0 to 100, provided p+q>0.

Such component (E) has an appropriate balance between hydrophilicity and hydrophobicity of the surfactant, and is compatible with the components (B-1) and (B-2), leading to enhanced stability of the emulsion. Moreover, properties of the nonionic surfactant itself make it easy to handle during producing the emulsion.

In the present invention, a particle surface of the (D) colloidal silica is preferably treated with oxide of a metal other than silicon.

In such component (D), the surface of the surface-treated colloidal silica particle is positively charged in a wide pH range, which causes electrical repulsion between the surface-treated colloidal silica particles and the emulsion particles in the emulsion composition, and hardly causes coalescence or flocculation. Accordingly, it is possible to more stably disperse the emulsion.

The emulsion composition of the present invention can further include a salt consisting of a basic substance including one or both of ammonia and organic amine, and an acidic substance.

Even when the emulsion composition of the present invention includes such salt, it has favorable film formability, excellent strength and flexibility of a film after cured, and favorable storage stability of the emulsion.

Additionally, the emulsion composition preferably contains octamethylcyclotetrasiloxane (D4), decamethylcyclopentasiloxane (D5), and dodecamethylcyclohexasiloxane (D6) each in an amount of 1,000 ppm (in terms of mass, the same applies hereinafter) or less.

Further, the emulsion composition more preferably contains hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), hexadecamethylcyclooctasiloxane (D8), octadecamethylcyclononasiloxane (D9), and eicosamethylcyclodecasiloxane (D10) in a total amount of 1,000 ppm or less.

The emulsion composition of the present invention contains a small amount of such low-molecular-weight cyclic siloxanes, and thus has excellent properties (elongation at break, etc.) of a film after cured.

The emulsion composition preferably includes emulsion having an average particle size of 1 µm or less, more preferably 500 nm or less.

In such emulsion composition of the present invention, buoyancy to be applied to the emulsion particle becomes smaller corresponding to the particle volume, which enables uniform dispersion of the particles in the emulsion and suppression of flocculation or coalescence of the particles, causing no separation by concentration or two-phase separation even during a long-term storage.

Additionally, the emulsion composition of the present invention can have 2.0 or more of an antiviral activity value Mv based on JIS L 1922.

The emulsion composition of the present invention can be applied to an object substance, such as a substrate to which an antiviral property is desired to be imparted, to form a film that contains a substance exhibiting antiviral performance.

Additionally, the present invention provides a method for producing the above-described film-forming organopolysiloxane emulsion composition, including the steps of:
(I) preparing an emulsion composition by emulsifying a mixture including:
   (A-1) organopolysiloxane with a terminal blocked with an alkoxy and/or a silanol group, the organopolysiloxane having a viscosity at 25°C of 300,000 mPa·s or less;
   (A-2) alkoxysilane represented by the following formula (3),

      R⁴ₑSi (OR⁵)₄₋ₑ (3)

      wherein R⁴ each independently represents a hydrogen atom or a substituted or unsubstituted monovalent organic group having 1 to 20 carbon atoms; R⁵ each independently represents a hydrogen atom or a substituted or unsubstituted monovalent organic group having 1 to 20 carbon atoms; and "e" represents 0 or 1,
      provided that a total amount of (A-1) and (A-2) is 100 parts by mass, and a ratio of (A-2) to (A-1) is 0 to 0.2;
   (B) a cationic surfactant: 0.1 to 30 parts by mass; and
   (C-1) water: 30 to 3,000 parts by mass;
(II) further adding (C-2) water to an obtained emulsion composition as necessary, followed by performing polymerization in the presence of (F) a basic catalyst at 0 to 40°C for 1 to 150 hours and further neutralization; and
(III) further adding 0.5 to 50 parts by mass of (D) colloidal silica, and (C-3) water as necessary,
   wherein the steps (II) and (III) are performed in any order or simultaneously after the step (I), and
   the (C) water is added to make a total amount of (C-1), (C-2), and (C-3) 30 to 3,000 parts by mass.

Such method for producing the film-forming organopolysiloxane emulsion composition of the present invention can efficiently produce an emulsion composition that has favorable film formability, excellent strength and flexibility of a film after cured, and favorable storage stability of the emulsion.

In this aspect, one or both of ammonia and organic amine can be used as the (F) basic catalyst.

The use of such catalyst enables the organopolysiloxane in the film-forming organopolysiloxane emulsion composition to have a viscosity at 25°C of 300,000 mPa·s or more, while enabling to significantly reduce byproducts of octamethylcyclotetrasiloxane (D4), decamethylcyclopentasiloxane (D5), and dodecamethylcyclohexasiloxane (D6) to make each amount thereof 1,000 ppm or less.

Additionally, one or both of the following (B-1) and (B-2) are preferably used as the (B) cationic surfactant:
(B-1) a cationic surfactant represented by Q¹₃(CH₃)N⁺·X⁻: 0 to 30 parts by mass,
(B-2) a cationic surfactant represented by Q²_{α}(CH₃)_{4-α}N⁺·X⁻: 0 to 30 parts by mass,
   wherein Q¹ represents a same or different kind of monovalent organic group having 6 to 30 carbon atoms; Q² represents a same or different kind of monovalent organic group having 6 to 30 carbon atoms; X each independently represents a halogen atom or a monovalent carboxyl group having 1 to 6 carbon atoms; and "α" represents an integer of 1 or 2, provided that a total amount of (B-1) and (B-2) is 0.1 to 30 parts by mass.

Such method for producing the emulsion composition can efficiently produce a composition with better storage stability of the emulsion.

Additionally, the method can further include adding (E) a nonionic surfactant in an amount of 0.1 to 30 parts by mass relative to 100 parts by mass of (A-1) and (A-2) in total in any of the steps (I) to (III).

Such method for producing the emulsion composition can efficiently produce a composition that can be more easily emulsified since the component (E) functions to supplement the emulsification performance, the composition having dramatically improved stability of the emulsion.

A nonionic surfactant represented by the following formula can be used as the component (E),

R³O(EO)ₚ(PO)_{q}H

wherein R³ represents a linear or branched alkyl group having 8 to 30 carbon atoms; EO represents an ethylene oxide group and PO represents a propylene oxide group, EO and PO being optionally arranged randomly or in blocks; and "p" and "q" each independently represents an integer of 0 to 100, provided p+q>0.

Such component (E) has properties easy to handle during producing emulsion.

Additionally, colloidal silica with a particle surface thereof treated with oxide of a metal other than silicon is preferably used as the component (D).

The use of such component (D) causes electrical repulsion between the surface-treated colloidal silica particles and the emulsion particles in the emulsion composition, and hardly causes coalescence or flocculation. Accordingly, it is possible to efficiently produce the more stable emulsion composition.

Additionally, the component (A-1) to be used preferably contains octamethylcyclotetrasiloxane (D4), decamethylcyclopentasiloxane (D5), and dodecamethylcyclohexasiloxane (D6) each in an amount of 1,000 ppm or less.

The method for producing the emulsion composition of the present invention can use a raw material containing a small amount of such low-molecular-weight cyclic siloxanes, thereby efficiently producing the emulsion composition containing the small amount of the low-molecular-weight cyclic siloxanes.

In the method for producing the emulsion composition of the present invention, the emulsion composition can contain octamethylcyclotetrasiloxane (D4), decamethylcyclopentasiloxane (D5), and dodecamethylcyclohexasiloxane (D6) each in an amount of 1,000 ppm or less, and the emulsion composition can also contain hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), hexadecamethylcyclooctasiloxane (D8), octadecamethylcyclononasiloxane (D9), and eicosamethylcyclodecasiloxane (D10) in a total amount of 1,000 ppm or less.

With the method for producing the emulsion composition of the present invention, it is possible to efficiently produce the emulsion composition containing a small amount of such low-molecular-weight cyclic siloxanes.

### ADVANTAGEOUS EFFECTS OF INVENTION

With the film-forming organopolysiloxane emulsion composition of the present invention (hereinafter also referred to as an emulsion composition), it is possible to provide: a film-forming organopolysiloxane emulsion composition that has favorable film formability, excellent strength and flexibility of a film after cured, and favorable storage stability of the emulsion; and a film. Moreover, by treating various types of fibers or fiber products with the composition, flexibility and lubricity can be imparted. Furthermore, a fiber treatment agent containing the emulsion composition of the present invention as an active component is excellent in wash durability and can keep flexibility and lubricity even after washing process.

### DESCRIPTION OF EMBODIMENTS

As a result of intensive investigation to achieve the above object, the present inventors have found that a film-forming organopolysiloxane emulsion composition including (A) a particular organopolysiloxane having a viscosity at 25°C of 300,000 mPa·s or more, (B) a cationic surfactant, (C) water, and (D) colloidal silica each in a specific amount has favorable film formability, excellent strength and flexibility of a film after cured, and favorable storage stability of the emulsion, and completed the present invention.

Thus, the present invention is a film-forming organopolysiloxane emulsion composition including:
(A) organopolysiloxane represented by the following average composition formula (1), the organopolysiloxane having a viscosity at 25°C of 300,000 mPa·s or more and containing at least two alkoxy groups or hydroxy groups each bonded to a silicon atom per molecule: 100 parts by mass, 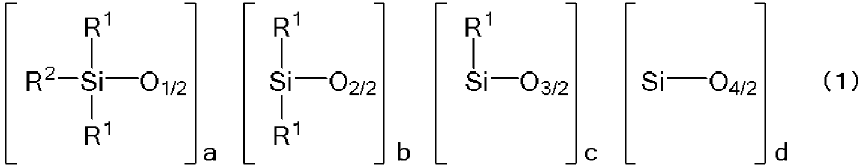 wherein R¹ each independently represents a hydrogen atom or an unsubstituted or substituted monovalent organic group having 1 to 20 carbon atoms; R² represents an unsubstituted or substituted alkyl group having 1 to 20 carbon atoms, aryl group having 6 to 20 carbon atoms, alkoxy group having 1 to 20 carbon atoms, or a hydroxy group; "a" represents an integer of 2 to 1,000, "b" represents an integer of 10 to 10,000, "c" represents an integer of 0 to 1,000, "d" represents an integer of 0 to 1,000, and c+d is an integer of 0 to 2,000 such that the viscosity of the organopolysiloxane at 25°C satisfies the range of 300,000 mPa·s or more;
(B) a cationic surfactant: 0.1 to 30 parts by mass;
(C) water: 30 to 3,000 parts by mass; and
(D) colloidal silica: 0.5 to 50 parts by mass.

Hereinafter, the present invention will be described in detail. However, the present invention is not limited thereto.

### Film-Forming Organopolysiloxane Emulsion Composition

The film-forming organopolysiloxane emulsion composition of the present invention includes:
(A) organopolysiloxane represented by the following average composition formula (1), the organopolysiloxane having a viscosity at 25°C of 300,000 mPa·s or more and containing at least two alkoxy groups or hydroxy groups each bonded to a silicon atom per molecule: 100 parts by mass, 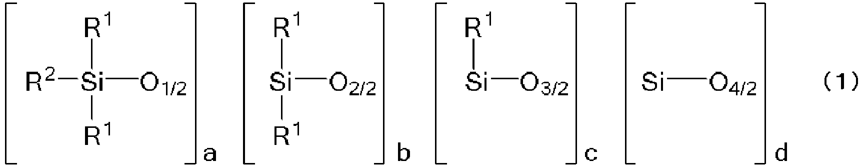 wherein R¹ each independently represents a hydrogen atom or an unsubstituted or substituted monovalent organic group having 1 to 20 carbon atoms; R² represents an unsubstituted or substituted alkyl group having 1 to 20 carbon atoms, aryl group having 6 to 20 carbon atoms, alkoxy group having 1 to 20 carbon atoms, or a hydroxy group; "a" represents an integer of 2 to 1,000, "b" represents an integer of 10 to 10,000, "c" represents an integer of 0 to 1,000, "d" represents an integer of 0 to 1,000, and c+d is an integer of 0 to 2,000 such that the viscosity of the organopolysiloxane at 25°C satisfies the range of 300,000 mPa·s or more;
(B) a cationic surfactant: 0.1 to 30 parts by mass;
(C) water: 30 to 3,000 parts by mass; and
(D) colloidal silica: 0.5 to 50 parts by mass. If necessary, other components may be further included in addition to the components (A) to (D). Hereinafter, each component will be described.

### Component (A)

The component (A) is organopolysiloxane represented by the following average composition formula (1). The organopolysiloxane has a viscosity at 25°C of 300,000 mPa·s or more and contains at least two alkoxy groups or hydroxy groups each bonded to a silicon atom per molecule. In the emulsion composition of the present invention, this component (A) is contained in an amount of 100 parts by mass. 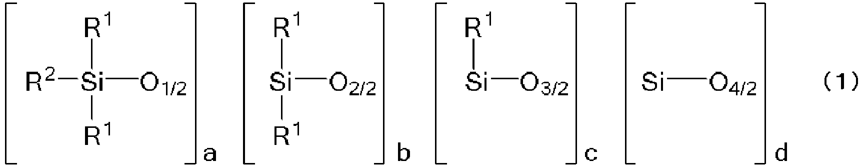 (In the formula, R¹ each independently represents a hydrogen atom or an unsubstituted or substituted monovalent organic group having 1 to 20 carbon atoms; R² represents an unsubstituted or substituted alkyl group having 1 to 20 carbon atoms, aryl group having 6 to 20 carbon atoms, alkoxy group having 1 to 20 carbon atoms, or a hydroxy group; "a" represents an integer of 2 to 1,000, "b" represents an integer of 10 to 10,000, "c" represents an integer of 0 to 1,000, "d" represents an integer of 0 to 1,000, and c+d is an integer of 0 to 2,000 such that the viscosity of the organopolysiloxane at 25°C satisfies the range of 300,000 mPa·s or more.)

In the above formula (1), R¹ each independently represents a hydrogen atom or an unsubstituted or substituted monovalent organic group having 1 to 20 carbon atoms, which may be any of linear, branched, or cyclic. Specific examples thereof include: alkyl groups such as methyl, ethyl, propyl, butyl, pentyl, hexyl, heptyl, octyl, nonyl, decyl, dodecyl, tetradecyl, hexadecyl, octadecyl, cyclopentyl, cyclohexyl, and cycloheptyl; aryl groups such as phenyl, tolyl, and naphthyl; alkenyl groups such as vinyl and allyl; or substituted forms of these organic groups in which some of hydrogen atoms are substituted with halogen atoms or organic groups containing a polar group such as amino, acryloxy, methacryloxy, epoxy, and mercapto. Here, 80% or more of R¹ preferably represents a methyl group from the industrial and property perspectives.

R² represents an unsubstituted or substituted alkyl group having 1 to 20 carbon atoms, aryl group having 6 to 20 carbon atoms, alkoxy group having 1 to 20 carbon atoms, or a hydroxy group. R² may be any of linear, branched, or cyclic. Besides a hydroxy group, specific examples thereof include: methyl group, ethyl group, propyl group, butyl group, pentyl group, hexyl group, heptyl group, octyl group, nonyl group, decyl group, dodecyl group, tetradecyl group, hexadecyl group, octadecyl group, cyclopentyl group, cyclohexyl group, cycloheptyl group; phenyl group, tolyl group, naphthyl group; methoxy group, ethoxy group, propoxy group, butoxy group, hexyloxy group, heptyloxy group, octyloxy group, decyloxy group, tetradecyloxy group, or substituted forms of these groups in which some or all of hydrogen atoms bonded thereto are substituted with halogen atoms, amino groups, cyano groups, or the like; etc. Among them, a methyl group, a hydroxy group, a methoxy group, or an ethoxy group is preferred as R², which is determined such that at least two alkoxy groups or hydroxy groups each bonded to a silicon atom are contained in one molecule.

"a", "b", "c", and "d" represent integers that allow the viscosity of the organopolysiloxane at 25°C to satisfy the range of 300,000 mPa·s or more.

"a" represents an integer of 2 to 1,000, preferably an integer of 2 to 500, and more preferably an integer of 2 to 100. If "a" is greater than 1,000, there is a risk of poor flexibility of a silicone rubber film.

"b" represents an integer of 10 to 10,000, preferably an integer of 50 to 7,000, and more preferably an integer of 100 to 5,000. If "b" is less than 10, there is a risk of poor flexibility of a silicone rubber film or no formation of the film, whereas if "b" is greater than 10,000, there is a risk of decrease in tear strength and tensile strength of the film.

"c" represents an integer of 0 to 1,000, preferably an integer of 0 to 200, and more preferably an integer of 0 to 100. If "c" is greater than 1,000, there is a risk of poor flexibility of a silicone rubber film or decrease in tear strength and tensile strength of the film.

"d" represents an integer of 0 to 1,000, preferably an integer of 0 to 200, and more preferably an integer of 0 to 100. If "d" is greater than 1,000, there is a risk of poor flexibility of a silicone rubber film or decrease in tear strength and tensile strength of the film.

Moreover, c+d is an integer of 0 to 2,000, preferably 0 to 400, and more preferably 0 to 200.

The organopolysiloxane as the component (A) has a viscosity at 25°C of 300,000 mPa·s or more, preferably 400,000 mPa·s or more, more preferably 500,000 mPa·s or more, even more preferably 1,000,000 mPa·s or more, and the most preferably a viscosity too high to be measured by a viscosity measurement method as described later.

Note that a viscosity (absolute viscosity) in the present invention refers to a measurement value taken at 25°C using a BM-type rotational viscometer (TVB-10M). The viscosity of 300,000 mPa·s or more includes all of unmeasurable viscosity even by using a rotor M4, which can measure the highest viscosity range of the BM-type rotational viscometer (measurement upper limit viscosity: 2,000,000 mPa·s), unmeasurable viscosity of the component winding around the rotor of the BM-type rotational viscometer, and unmeasurable viscosity of the component unable to dissolve in toluene.

Specific examples of the organopolysiloxane as the component (A) in the present invention include, but are not limited to, the following average composition formulae. In the following average composition formulae, "a", "b", "b1", "b2", "b3", "c", "c1", "c2", "c3", and "d" represent values that allow the viscosity of the organopolysiloxane at 25°C to satisfy the range of 300,000 mPa·s or more, and "a", "b", "c", and "d" are as defined above. "b1", "b2", and "b3" each represents an integer, provided that a sum of these integers equals "b", i.e. the integer satisfying the range of 1 to 10,000. Each of "c1", "c2", and "c3" can represent an integer, provided that a sum of these integers equals "c", i.e. the integer satisfying the range of 0 to 1,000.

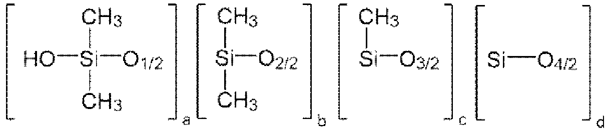

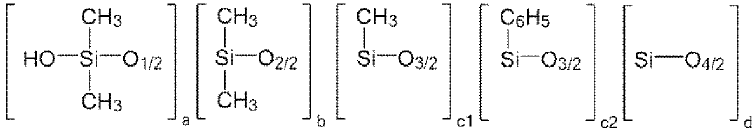

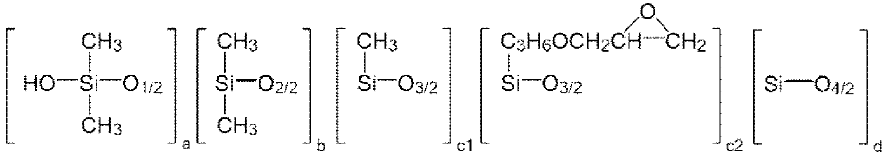

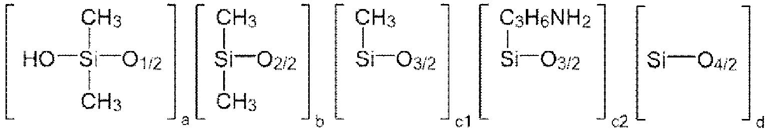

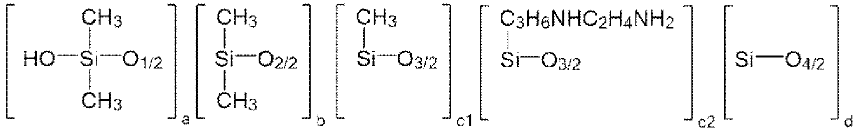

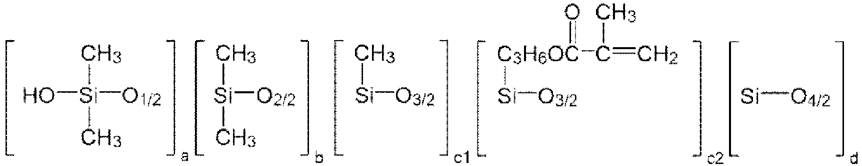

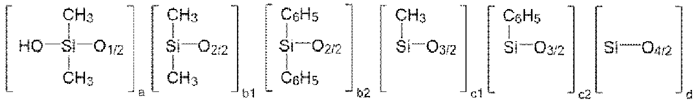

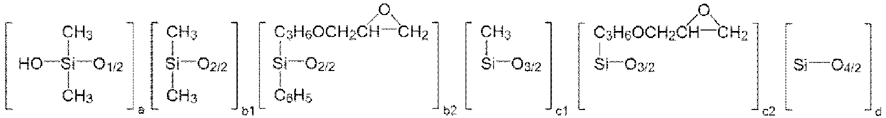

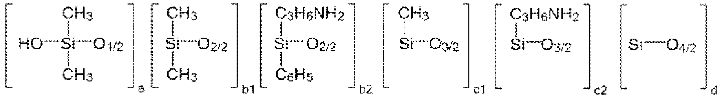

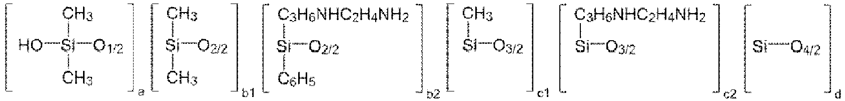

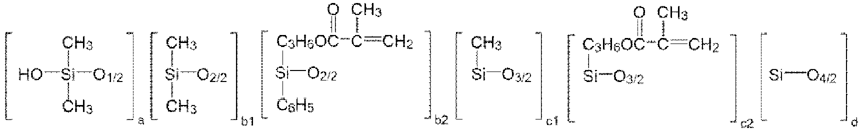

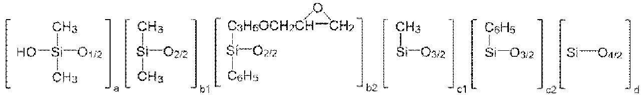

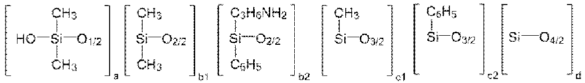

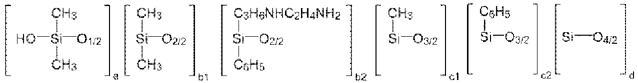

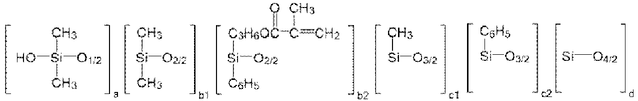

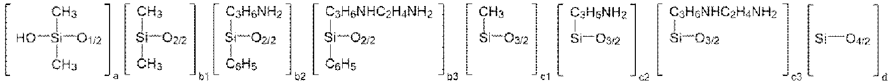

### Component (B)

The component (B) is a cationic surfactant and contained in an amount of 0.1 to 30 parts by mass, preferably 0.2 to 25 parts by mass, and more preferably 0.5 to 20 parts by mass relative to 100 parts by mass of the component (A). If the amount of the component (B) is less than 0.1 parts by mass or more than 30 parts by mass, the emulsion may become unstable, or polymerization to a higher degree may become difficult to proceed through dealcoholization polycondensation or dehydration polycondensation between the respective alkoxy groups or hydroxy groups contained in the organopolysiloxane.

Moreover, the component (B) preferably contains one or both of the following components (B-1) and (B-2), (B-1) a cationic surfactant represented by Q¹₃ (CH₃) N⁺ -X⁻, (B-2) a cationic surfactant represented by Q²_{α}(CH₃)_{4-α}N⁺·X⁻,
wherein Q¹ represents a same or different kind of monovalent organic group having 6 to 30 carbon atoms; Q² represents a same or different kind of monovalent organic group having 6 to 30 carbon atoms; X each independently represents a halogen atom or a monovalent carboxyl group having 1 to 6 carbon atoms; and "α" represents an integer of 1 or 2.

These cationic surfactants as the components (B-1) and (B-2) are to emulsify and disperse the organopolysiloxane in water. The present inventors have considered an action mechanism of the components (B-1) and (B-2) as follows, besides an action mechanism as an emulsifying agent.

In a method for producing the organopolysiloxane emulsion composition of the present invention, it is believed that after the organopolysiloxane is emulsified and dispersed in water, exchange between OH⁻ generated in an aqueous phase upon addition of a basic catalyst (alkaline catalyst) and counter ions of the cationic surfactants as the components (B-1) and (B-2) causes the cationic surfactants themselves to act as a catalyst, and as a result, the organopolysiloxane as the component (A) can be more efficiently polymerized to a higher degree.

The cationic surfactant as the component (B-1) is the cationic surfactant represented by Q¹₃(CH₃)N⁺·X⁻ as described above, wherein Q¹ represents a same or different kind of monovalent organic group having 6 to 30 carbon atoms, preferably a monovalent organic group having 7 to 20 carbon atoms, and more preferably a monovalent organic group having 8 to 18 carbon atoms. When Q¹ has 6 or more carbon atoms, the surfactant has proper hydrophilicity and sufficient contact frequency with the organopolysiloxane as the component (A), allowing the organopolysiloxane to be polymerized to a higher degree in a short time. Additionally, when Q¹ has 30 or less carbon atoms, the surfactant has sufficient emulsifying capacity, allowing to obtain the stable emulsion.

Specific examples of Q¹ include: alkyl groups such as hexyl, heptyl, octyl, nonyl, decyl, undecyl, dodecyl, tridecyl, tetradecyl, pentadecyl, hexadecyl, heptadecyl, octadecyl, nonadecyl, eicosyl, docosanyl, cyclohexyl, and cycloheptyl; aryl groups such as phenyl, tolyl, and naphthyl; aralkyl groups such as benzyl; alkenyl groups such as oleyl; and the like. Among them, octyl, dodecyl, hexadecyl, and octadecyl are preferred.

Moreover, X⁻ represents a halogen ion or a monovalent carboxyl ion having 1 to 6 carbon atoms. Specific examples thereof include: halogen ions such as Cl⁻, Br⁻, and I⁻; and carboxyl ions such as HCOO⁻, CH₃COO⁻, and C₂H₅COO⁻. Among them, Cl⁻, Br⁻, HCOO⁻, and CH₃COO⁻ are preferred.

Specific examples of the component (B-1) include, but are not limited to, trihexylmethylammonium chloride, triheptylmethylammonium chloride, trioctylmethylammonium chloride, trinonylmethylammonium chloride, tridecylmethylammonium chloride, trilaurylmethylammonium chloride, trioctylmethylammonium acetate, trilaurylmethylammonium acetate, and the like.

The cationic surfactant as the component (B-1) can be used in an amount of 0 to 30 parts by mass, preferably 0.2 to 25 parts by mass, and more preferably 0.5 to 20 parts by mass relative to 100 parts by mass of the component (A). The amount of 0 to 30 parts by mass leads to favorable stability of the emulsion.

Moreover, the cationic surfactant as the component (B-2) is the cationic surfactant represented by Q²_{α}(CH₃)₄-_{α}N⁺·X⁻ as described above, which is capable of improving stability of the emulsion. Here, Q² represents a same or different kind of monovalent organic group having 6 to 30 carbon atoms, preferably a monovalent organic group having 12 to 28 carbon atoms, and more preferably a monovalent organic group having 18 to 26 carbon atoms. When Q² has 6 or more carbon atoms, favorable stability of the emulsion can be obtained. When Q² has 30 or less carbon atoms, similar to Q¹, the surfactant has sufficient emulsifying capacity, allowing to obtain the stable emulsion. X⁻ of Q² is the same as the above X⁻ of Q¹. "α" represents an integer of 1 or 2.

Specific examples of the component (B-2) include, but are not limited to, hexyltrimethylammonium chloride, phenyltrimethylammonium chloride, heptyltrimethylammonium chloride, benzyltrimethylammonium chloride, octyltrimethylammonium chloride, nonyltrimethylammonium chloride, decyltrimethylammonium chloride, lauryltrimethylammonium chloride, myristyltrimethylammonium chloride, hexadecyltrimethylammonium chloride, stearyltrimethylammonium chloride, icosyltrimethylammonium chloride, behenyltrimethylammonium chloride, hexyltrimethylammonium acetate, phenyltrimethylammonium acetate, heptyltrimethylammonium acetate, benzyltrimethylammonium acetate, octyltrimethylammonium acetate, nonyltrimethylammonium acetate, decyltrimethylammonium acetate, lauryltrimethylammonium acetate, myristyltrimethylammonium acetate, hexadecyltrimethylammonium acetate, stearyltrimethylammonium acetate, icosyltrimethylammonium acetate, behenyltrimethylammonium acetate, dihexyldimethylammonium chloride, diphenyldimethylammonium chloride, hexylphenyldimethylammonium chloride, heptylphenyldimethylammonium chloride, octylphenyldimethylammonium chloride, nonylphenyldimethylammonium chloride, decylphenyldimethylammonium chloride, laurylphenyldimethylammonium chloride, myristylphenyldimethylammonium chloride, hexadecylphenyldimethylammonium chloride, stearylphenyldimethylammonium chloride, icosylphenyldimethylammonium chloride, behenyldimethylammonium chloride, diheptyldimethylammonium chloride, dibenzyldimethylammonium chloride, dioctyldimethylammonium chloride, dinonyldimethylammonium chloride, didecyldimethylammonium chloride, dilauryldimethylammonium chloride, dimyristyldimethylammonium chloride, dihexadecyldimethylammonium chloride, distearyldimethylammonium acetate, diicosyldimethylammonium acetate, dibehenyldimethylammonium acetate, dihexyldimethylammonium acetate, diphenyldimethylammonium acetate, diheptyldimethylammonium acetate, dibenzyldimethylammonium acetate, dioctyldimethylammonium acetate, dinonyldimethylammonium acetate, didecyldimethylammonium acetate, dilauryldimethylammonium acetate, dimyristyldimethylammonium acetate, dihexadecyldimethylammonium acetate, distearyldimethylammonium acetate, diicosyldimethylammonium acetate, dibehenyldimethylammonium acetate, and the like.

The cationic surfactant as the component (B-2) can be used in an amount of 0 to 30 parts by mass, preferably 0.2 to 25 parts by mass, and more preferably 0.5 to 20 parts by mass relative to 100 parts by mass of the component (A). The amount of 30 parts by mass or less leads to favorable stability of the emulsion.

Note that as described above, in the emulsion composition of the present invention, the components (B-1) is contained in the amount of 0 to 30 parts by mass and (B-2) is contained in the amount of 0 to 30 parts by mass respectively relative to 100 parts by mass of the component (A), while a total amount of the components (B-1) and (B-2) is within a range of 0.1 to 30 parts by mass. The total amount within this range leads to favorable stability of the emulsion.

Since the component (B-1) is highly hydrophobic as compared with the component (B-2), it has high contact frequency with the organopolysiloxane as the component (A) and is more expected to have an effect of increasing a rate of polymerization. Meanwhile, the component (B-1) is highly hydrophobic and has poorer emulsifying capacity than the component (B-2). Therefore, in a case of using only (B-1), it is necessary to further enhance stability of the emulsion over time depending on the conditions of the emulsion, such as composition, particle size, viscosity, and pH. Accordingly, the combined use with the component (B-2) having higher emulsifying capacity as compared with the component (B-1) enables to enhance the stability of the emulsion while keeping the increased rate of polymerization.

As described above, although the component (B-1) can be used alone, the combined use of the components (B-1) and (B-2) enables to enhance the stability of the emulsion while keeping the increased rate of polymerization. The cationic surfactant of (B-1) is represented by Q¹₃(CH₃)N⁺·X⁻, while the cationic surfactant of (B-2) is represented by Q²_{α}(CH₃)_{4-α}N⁺·X⁻. (B-1) is characterized by three substituents Q¹ in quaternary ammonium, while (B-2) is characterized by one or two substituents Q² in quaternary ammonium. The more carbon atoms the monovalent organic groups Q¹, Q² have, the higher the hydrophobicity becomes, leading to large stearic hindrance due to bulkiness thereof. By selecting Q¹ and Q² to regulate the actions thereof, it is possible to achieve the preferable rate of polymerization and stability of the emulsion.

In the combination of the components (B-1) and (B-2), the total number of carbon atoms of the substituents in each quaternary ammonium is not particularly limited. From the viewpoint of obtaining suitable emulsion, a difference between N_{(B-1)} and N_{(B-2)} is preferably 0 to 35, wherein N_{(B-1)} represents the total number of carbon atoms of the substituents in the quaternary ammonium of (B-1) (the total number of carbon atoms of three Q¹ and one methyl group), and N_{(B-2)} represents the total number of carbon atoms of the substituents in the quaternary ammonium of (B-2) (the total number of carbon atoms of one or two Q² and the rest of the methyl groups). The lower limit thereof may be any integer of 0 to 4, and the upper limit thereof may be any integer of 30 to 34. By selecting an appropriate value as the difference between N_{(B-1)} and N_{(B-2)}, the suitable emulsion can be obtained.

Moreover, a combination of the number of carbon atoms of Q¹ and the number of carbon atoms of Q² is also not particularly limited. From the viewpoint of obtaining the suitable emulsion, a difference between the number of carbon atoms of Q¹ and the number of carbon atoms of Q² is preferably 0 to 15, where the lower limit thereof may be any integer of 0 to 4, and the upper limit thereof may be any integer of 10 to 14. By selecting an appropriate value as the difference between the number of carbon atoms of Q¹ and the number of carbon atoms of Q², the surfactants can have appropriate hydrophilicity, contact frequency with the organopolysiloxane as the component (A), and emulsifying capacity, and the organopolysiloxane can be polymerized to a higher degree through polycondensation with a suitable rate of polymerization, thereby obtaining the stable and suitable emulsion.

### Component (C)

To the emulsion composition of the present invention, water as the component (C) is added in an amount of 30 to 3,000 parts by mass, preferably 40 to 2,400 parts by mass, relative to 100 parts by mass of the component (A). Too little amount of the water does not lead to formation of oil-in-water type emulsion, whereas too much amount of the water is not economical.

### Component (D)

The component (D) is colloidal silica and contained in an amount of 0.5 to 50 parts by mass relative to 100 parts by mass of the component (A).

The colloidal silica as the component (D) acts as a film reinforcing agent. Even in a case that the emulsion composition cannot be used for applications requiring durability because of weak strength (particularly, hardness and tensile strength) of a film, the emulsion composition including the colloidal silica can dramatically improve the strength (particularly, hardness and tensile strength) of the film formed of the emulsion composition.

In the present invention, the colloidal silica is preferably hydrophilic and usable as an aqueous dispersion. A type of the colloidal silica is not limited as long as it can be used as a mixture with the emulsion composition, and a commercially available colloidal silica may be used.

In particular, by using colloidal silica with a particle surface thereof treated with oxide of a metal other than silicon, stability of the emulsion can be significantly improved. As the oxide of a metal other than silicon, substances having an isoelectric point of 5 or more, such as aluminum oxide, titanium oxide, iron oxide, zinc oxide, and magnesium oxide, are preferred. Due to the use of such colloidal silica, the surface of the colloidal silica particle is positively charged in a wide pH range, which causes electrical repulsion between the colloidal silica particles and the emulsion particles in the emulsion composition, and hardly causes coalescence or flocculation. Accordingly, it is possible to more stably disperse the emulsion. Note that the isoelectric point may be measured, for example, based on JIS R1638:1999. Additionally, due to the use of such colloidal silica, upon removing water to form a film, electrical repulsion occurs between the respective emulsion particles in the emulsion composition or between the respective colloidal silica particles, so that coalescence and flocculation are unlikely to occur. Accordingly, a more uniform film can be obtained (particles are more dispersed), and further, the strength (particularly, hardness and tensile strength) of the film formed of the emulsion composition can be dramatically improved.

Specific examples of the colloidal silica include SNOWTEX C, SNOWTEX XL, SNOWTEX 30L, SNOWTEX YL, SNOWTEX O, SNOWTEX OL, SNOWTEX OYL, SNOWTEX NXS, SNOWTEX NS, SNOWTEX N, SNOWTEX N-40, SNOWTEX AK, SNOWTEX AK-L, SNOWTEX AK-YL (all produced by Nissan Chemical Corporation), etc. Among the above, colloidal silica whose surface is treated with alumina, i.e. SNOWTEX AK, SNOWTEX AK-L, and SNOWTEX AK-YL are particularly preferred, but the colloidal silica is not limited thereto.

An average particle size of the colloidal silica is not particularly limited, and an average particle size of the above-described colloidal silica can be employed.

Note that an example of a similar composition containing silica/organopolysiloxane/water is a Pickering emulsion composition.

The Pickering emulsion refers to an emulsion that is stabilized by solid particles adsorbed (oriented) onto a liquid/liquid interface, and recently attracts attention because an emulsion composition can be produced without an emulsifying agent.

As the solid particles used in the Pickering emulsion composition, hydrophobic silica, hydrophobic cellulose, silicone resin powder, hollow hemispherical silicone particles, polyamide resins, talc, hydrophobic pigments, etc. are generally used. Among them, generally used as the silica is hydrophobic silica obtained by reacting hydroxyl groups on a surface of hydrophilic silica with trifunctional silane or the like to modify the surface with hydrocarbon or the like. Meanwhile, the preferable colloidal silica used in the present invention is an aqueous dispersion of hydrophilic silica fine particles having a number of silanol groups (Si-OH) on the surfaces which are preferably covered with a metal oxide other than silicon. Accordingly, the formulation of the emulsion composition of the present invention is different from that of the Pickering emulsion composition.

Moreover, in the present invention, since the colloidal silica does not adsorb (orient) onto a liquid/liquid (organopolysiloxane/water) interface, and is stably dispersed in an aqueous phase (continuous phase) while causing charge repulsion, a dispersion mechanism thereof is also different from that of the Pickering emulsion composition.

### Component (E)

The component (E) is a nonionic surfactant and can be contained in an amount of 0.1 to 30 parts by mass relative to 100 parts by mass of the component (A).

The nonionic surfactant as the component (E) functions to compensate for the lack of emulsifying capacity of the components (B-1) and (B-2), thereby enabling easy emulsification and dramatic improvement in stability of the emulsion.

The nonionic surfactant as the component (E) preferably has the following structure,

R³O(EO)ₚ(PO)_{q}H

wherein R³ represents a linear or branched alkyl group having 8 to 30 carbon atoms; EO represents an ethylene oxide group and PO represents a propylene oxide group, EO and PO being optionally arranged randomly or in blocks; and "p" and "q" each independently represents an integer of 0 to 100, provided p+q>0.

As described above, the nonionic surfactant as the component (E) is preferably the nonionic surfactant represented by R³O(EO)ₚ(PO)_{q}H, wherein R³ represents a linear or branched alkyl group having 8 to 30 carbon atoms, preferably a linear or branched alkyl group having 12 to 22 carbon atoms, and more preferably a linear or branched alkyl group having 13 to 18 carbon atoms.

When R³ has 8 or more carbon atoms, the surfactant has proper hydrophilicity and is compatible with the components (B-1) and (B-2), and there is no risk of separation by concentration or two-phase separation even after 2 months. Moreover, when R³ has 30 or less carbon atoms, hydrophobicity is not too high and sufficient emulsification can be achieved. Additionally, since R³ has 30 or less carbon atoms, there is no need to increase a polymerization degree of the ethylene oxide group ("p" in the formula) to deliberately increase the hydrophilicity. Accordingly, the ethylene oxide group may have the low polymerization degree, and properties of the nonionic surfactant itself are easy to handle to produce emulsion.

Specific examples of R³ include octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, pentacosyl, hexacosyl, heptacosyl, octacosyl, nonacosyl, triacontyl, and the like. Among them, dodecyl, tridecyl, tetradecyl, pentadecyl, hexadecyl, heptadecyl, octadecyl, nonadecyl, and eicosyl are preferred, among which tridecyl, tetradecyl, pentadecyl, hexadecyl, heptadecyl, and octadecyl are more preferred.

EO represents an ethylene oxide group and PO represents a propylene oxide group. EO and PO may be arranged randomly or in blocks. "p" and "q" each independently represents an integer of 0 to 100, preferably an integer of 2 to 80, and more preferably an integer of 4 to 60, provided p+q>0. Note that as a polymerization degree of PO ("q" in the formula) increases, the hydrophobicity tends to increase while an emulsifying property of the nonionic surfactant tends to decrease. Therefore, p>q is preferred.

Specific examples of the component (E) include, but are not limited to, polyoxyethylene (4) lauryl ether, polyoxyethylene (9) lauryl ether, polyoxyethylene (23) lauryl ether, polyoxyethylene (5) tridecyl ether, polyoxyethylene (10) tridecyl ether, polyoxyethylene (6) cetyl ether, polyoxyethylene (7) cetyl ether, polyoxyethylene (6) stearyl ether, polyoxyethylene (7) stearyl ether, polyoxyethylene (20) stearyl ether, polyoxyethylene (50) stearyl ether, polyoxyethylene (60) stearyl ether, and the like.

Additionally, in order to supplement the stability of the emulsion, etc., there is no problem with adding a cationic surfactant other than the components (B-1) and (B-2), such as quaternary ammonium salt and alkylamine acetate, and a zwitterionic surfactant such as alkyl betaine and alkyl imidazoline.

In the present invention, in addition to the cationic surfactant, the nonionic or zwitterionic surfactant as described above can be added, but an anionic surfactant having strong catalytic action may not be added. In the present invention, the emulsion can be obtained by emulsion polymerization without adding an anionic surfactant, such that the emulsion composition of the present invention can be used together with cationic emulsion and chemical agents used for fiber treatment, hair cosmetics, etc.**,** and has good stability and usefulness with no limitation to conditions for use or blending. This is the feature of the present invention, which cannot be found in conventional emulsion obtained by emulsion polymerization using an anionic surfactant.

### Other Components

The emulsion composition of the present invention may further include a salt consisting of a basic substance including one or both of ammonia and organic amine, and an acidic substance.

The emulsion composition of the present invention preferably includes a salt consisting of a basic substance including ammonia and/or organic amine, and a strongly acidic substance and/or a weakly acidic substance. This salt consisting of the basic substance including ammonia and/or organic amine, and the strongly acidic substance and/or the weakly acidic substance is a salt generated by neutralizing a basic catalyst (alkaline catalyst) to be used for polymerization during producing the emulsion composition of the present invention as described later.

By using ammonia and/or organic amine as a catalyst, the viscosity at 25°C of the organopolysiloxane in the organopolysiloxane emulsion composition of the present invention can satisfy the range of 300,000 mPa·s or more while byproducts of octamethylcyclotetrasiloxane (D4), decamethylcyclopentasiloxane (D5), and dodecamethylcyclohexasiloxane (D6) can be significantly reduced, each being contained in an amount of 1,000 ppm or less.

Accordingly, in the present invention, addition of acid with strong acidity and/or weak acidity as a neutralizer to stop polymerization results in generation of the salt consisting of the basic substance including ammonia and/or organic amine, and the strongly acidic substance and/or the weakly acidic substance in the emulsion composition.

Even when containing the above salt, the emulsion composition of the present invention has favorable film formability, excellent strength and flexibility of a film after cured, and favorable storage stability of the emulsion. However, in order to further improve the stability of the emulsion composition, the above salt is preferably contained in a smaller amount. A salt concentration in the emulsion composition is preferably 5 mass% or less, more preferably 3 mass% or less, and further preferably 1 mass% or less.

Moreover, in order to prevent separation of the emulsion composition, it is generally preferable not to contain too much amount of a component having an effect of decreasing stability of emulsion, such as alcohol. An alcohol concentration in the emulsion composition is preferably 5 mass% or less, more preferably 3 mass% or less, and further preferably 1 mass% or less.

Moreover, the cationic surfactants as the components (B-1) and (B-2) may be sold in a diluted form in a solvent (especially alcohol) such as ethanol and IPA. A concentration of the solvent (especially alcohol) is preferably 20 mass% or less, more preferably 13 mass% or less, and further preferably 7 mass% or less. If the concentration of the solvent (especially alcohol) is more than 20 mass%, there is a risk that the decreased stability of the emulsion makes it more susceptible to separation over time. Note that the above alcohol refers to aliphatic alcohol having 1 to 20 carbon atoms. Incidentally, the above-described numerical range is merely one example and not limitative, and can be set in consideration of the stability of the emulsion composition including the other components.

Moreover, although a particle size of the emulsion composition of the present invention is not particularly limited, an average particle size of the emulsion composition is preferably 1 µm or less, more preferably 500 nm or less, from the viewpoint of the stability of the emulsion. When the average particle size is 1 µm or less, buoyancy to be applied to the emulsion particle becomes smaller corresponding to the particle volume, which enables uniform dispersion of the particles in the emulsion and suppression of flocculation or coalescence of the particles, causing no separation by concentration or two-phase separation even during a long-term storage.

Note that the average particle size in the present description refers to a particle size corresponding to a cumulative value up to 50% in a volume-based particle size distribution measured by using a laser diffraction/scattering particle size distribution analyzer.

In the film-forming organopolysiloxane emulsion composition of the present invention, octamethylcyclotetrasiloxane (D4), decamethylcyclopentasiloxane (D5), and dodecamethylcyclohexasiloxane (D6) each can be contained in an amount of 1,000 ppm or less.

Additionally, in the emulsion composition, hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), hexadecamethylcyclooctasiloxane (D8), octadecamethylcyclononasiloxane (D9), and eicosamethylcyclodecasiloxane (D10) can be contained in a total amount of 1,000 ppm or less.

In a method for producing the emulsion composition as described later, a cyclic siloxane oligomer such as octamethylcyclotetrasiloxane is used as a low-molecular-weight siloxane to be subjected to emulsion polymerization, because of its easy availability as well as easy emulsification and ring-opening polymerization thereof. However, the ring-opening polymerization of the cyclic siloxane oligomer is equilibration reaction, and the emulsion after emulsion polymerization generally has a cyclic siloxane oligomer, as typified by octamethylcyclotetrasiloxane, remaining in the polysiloxane.

Therefore, the oligomer may volatilize from the emulsion during storage or use, impairing physical stability of the emulsion system. Moreover, in a case of using a large amount of this emulsion as a hair cosmetic for hair treatment, for example, and especially performing heat blow-dry treatment, the volatilized oligomer may contaminate the surrounding environment or cause a contact failure of electrical equipment. Further, when such emulsion is used in dermatological cosmetics and the like, the low-molecular-weight cyclic siloxane oligomer contained therein may impair the feel due to its volatility. Accordingly, it has been demanded to reduce the amount of the cyclic siloxane oligomer in the emulsion. In particular, of the cyclic siloxanes, octamethylcyclotetrasiloxane and decamethylcyclopentasiloxane are easily generated through equilibration reaction and are stable compounds with volatility, so that reduction in their contents has been required.

Such polydiorganosiloxane with a terminal blocked with a silanol group is synthesized by, for example, hydrolysis and polycondensation of dimethyldichlorosilane, or synthesized by, for example, ring-opening polymerization of the corresponding cyclic siloxane oligomer in the presence of an acidic catalyst such as sulfuric acid, or an alkaline catalyst such as potassium hydroxide and potassium silanolate. In the resulting product, unreacted cyclic siloxane oligomers, for example, hexamethylcyclotrisiloxane, octamethylcyclotetrasiloxane, decamethylcyclopentasiloxane, dodecamethylcyclohexasiloxane, and the like are present. In order to avoid the above-described problems caused by the remaining cyclic siloxane oligomers after emulsion polymerization, it is preferable to reduce the amount of the cyclic siloxane oligomers contained in the raw material. Control of the cyclic siloxane oligomers in the component (A) in this manner can be achieved, for example, by distilling off the existing cyclic siloxane oligomers from a polymer obtained by ring-opening polymerization under reduced pressure.

As described above, because of the recent demand for products containing the reduced amount of octamethylcyclotetrasiloxane, decamethylcyclopentasiloxane, dodecamethylcyclohexasiloxane, and the like, it is preferable that the amount of the cyclic siloxanes in the emulsion composition falls within the above range.

Also in the emulsion composition of the present invention, each amount of the octamethylcyclotetrasiloxane (D4), the decamethylcyclopentasiloxane (D5), and the dodecamethylcyclohexasiloxane (D6) after storage at 25°C for 6 months is almost unchanged from each amount immediately after production. The emulsion composition containing the octamethylcyclotetrasiloxane (D4), the decamethylcyclopentasiloxane (D5), and the dodecamethylcyclohexasiloxane (D6) each in an amount of less than 1,000 ppm immediately after the production still contains the octamethylcyclotetrasiloxane (D4), the decamethylcyclopentasiloxane (D5), and the dodecamethylcyclohexasiloxane (D6) each in an amount of 1,000 ppm or less after storage at 25°C for 6 months.

The emulsion composition of the present invention has film formability. A film forming method is not particularly limited, but a uniform film is formed by removing water from the emulsion composition to flocculate the organopolysiloxane in the emulsion composition. A water removal method is not particularly limited, but the water may be removed, for example, at 100°C or higher in a short time or gradually removed at 25°C.

For example, a film is formed by weighing the emulsion composition to have nonvolatile matter of 8.0 g on a 15 cm×10 cm PP (polypropylene) tray, drying at 25°C for 48 hours, and then further drying at 105°C for 1 hour. Physical properties of the film prepared as described above are evaluated by measuring hardness, tensile strength, and elongation of the film based on JISK6249.

### Method for Producing Emulsion Composition

Next, a method for producing the emulsion composition of the present invention is performed in the following steps. In other words,
a method for producing the above-described film-forming organopolysiloxane emulsion composition includes the steps of:
(I) preparing an emulsion composition by emulsifying a mixture including:
   (A-1) organopolysiloxane with a terminal blocked with an alkoxy and/or a silanol group, the organopolysiloxane having a viscosity at 25°C of 300,000 mPa·s or less;
   (A-2) alkoxysilane represented by the following formula (3),

      R⁴ₑSi (OR⁵)₄₋ₑ (3)

      wherein R⁴ each independently represents a hydrogen atom or a substituted or unsubstituted monovalent organic group having 1 to 20 carbon atoms; R⁵ each independently represents a hydrogen atom or a substituted or unsubstituted monovalent organic group having 1 to 20 carbon atoms; and "e" represents 0 or 1,
      provided that a total amount of (A-1) and (A-2) is 100 parts by mass, and a ratio of (A-2) to (A-1) is 0 to 0.2;
   (B) a cationic surfactant: 0.1 to 30 parts by mass; and
   (C-1) water: 30 to 3,000 parts by mass;
(II) further adding (C-2) water to an obtained emulsion composition as necessary, followed by performing polymerization in the presence of (F) a basic catalyst at 0 to 40°C for 1 to 150 hours and further neutralization; and
(III) further adding 0.5 to 50 parts by mass of (D) colloidal silica, and (C-3) water as necessary,
   wherein the steps (II) and (III) are performed in any order or simultaneously after the step (I), and
   the (C) water is added to make a total amount of (C-1), (C-2), and (C-3) 30 to 3,000 parts by mass.

Note that after the step (I), the steps (II) and (III) may be performed in any order or may be performed simultaneously.

### Component (A-1)

Firstly, the (A-1) organopolysiloxane that has a terminal blocked with an alkoxy and/or a silanol group and has a viscosity at 25°C of 300,000 mPa·s or less is a raw material for the organopolysiloxane as the component (A). The viscosity at 25°C of the organopolysiloxane with the terminal blocked with an alkoxy and/or a silanol group is preferably 150,000 mPa·s or less, more preferably 50,000 mPa·s or less. When the viscosity at 25°C is 300,000 mPa·s or less, the emulsion has a smaller particle size and high stability. Note that the organopolysiloxane may have a branch structure as long as it has the viscosity at 25°C of 300,000 mPa·s or less. Note that even in a case that an alkoxy group such as a methoxy or ethoxy group is at the terminal, the alkoxy group can be hydrolyzed to form a silanol group in the emulsion composition, so that polymerization of the organopolysiloxane with the terminal blocked with an alkoxy group can be performed in the same manner.

Usable as the component (A-1) is the one containing the octamethylcyclotetrasiloxane (D4), the decamethylcyclopentasiloxane (D5), and the dodecamethylcyclohexasiloxane (D6) each in an amount of 1,000 ppm or less.

In the method for producing the emulsion composition of the present invention, the use of such raw material containing a small amount of low-molecular-weight cyclic siloxanes enables to efficiently produce the emulsion composition containing the small amount of the low-molecular-weight cyclic siloxanes.

Specific examples of the component (A-1) include the following average composition formulae, but are not limited thereto. In the following average composition formulae, "g", h+i, and h+i+j represent values that allow the viscosity at 25°C of the organopolysiloxane with the terminal blocked with an alkoxy and/or silanol group to satisfy the range of less than 300,000 mPa·s. Moreover, each of "g", h+i, and h+i+j in the following general formulae can typically have a value of 1 to 2000.

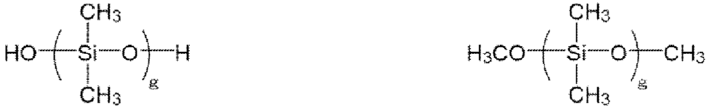

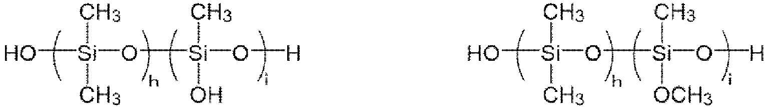

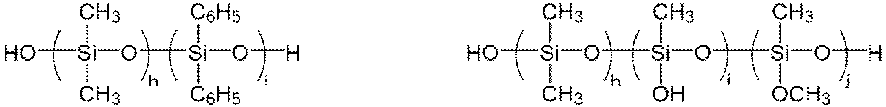

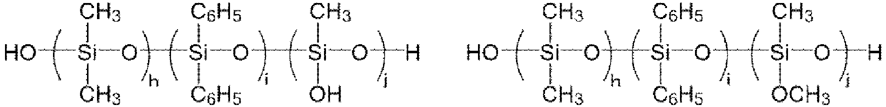

### Component (A-2)

The organoalkoxysilane as the component (A-2) is a raw material for the organopolysiloxane as the component (A), and represented by the following formula (3),

R⁴ₑSi(OR⁵)₄₋ₑ (3)

wherein R⁴ each independently represents a hydrogen atom or a substituted or unsubstituted monovalent organic group having 1 to 20 carbon atoms; R⁵ each independently represents a hydrogen atom or a substituted or unsubstituted monovalent organic group having 1 to 20 carbon atoms; and "e" represents 0 or 1.

R⁴ herein each independently represents a hydrogen atom or a substituted or unsubstituted monovalent organic group having 1 to 20 carbon atoms. Examples of the monovalent organic group having 1 to 20 carbon atoms include: alkyl groups such as methyl, ethyl, propyl, butyl, pentyl, hexyl, heptyl, octyl, nonyl, decyl, dodecyl, tetradecyl, hexadecyl, octadecyl, cyclopentyl, cyclohexyl, and cycloheptyl; aryl groups such as phenyl, tolyl, and naphthyl; alkenyl groups such as vinyl and allyl; or substituted forms of these organic groups in which some of hydrogen atoms are substituted with halogen atoms or organic groups containing a polar group such as amino, acryloxy, methacryloxy, epoxy, and mercapto; and the like. Here, 80% or more of R⁴ preferably represents a methyl group from the industrial and property perspectives. R⁵ each independently represents a hydrogen atom or a substituted or unsubstituted monovalent organic group having 1 to 20 carbon atoms. The monovalent organic group having 1 to 20 carbon atoms as R⁵ is the same as the above R⁴, and a methyl group, an ethyl group, a propyl group, and a butyl group are preferred, among which a methyl group and an ethyl group are further preferred.

The component (A-2) is used in an amount of 0 to 20 parts by mass, preferably 0 to 15 parts by mass, more preferably 0 to 10 parts by mass, and particularly preferably 0 to 5 parts by mass relative to 100 parts by mass of the components (A-1) and (A-2) in total. When the component (A-2) is blended in the amount within the above range, a formed film will have sufficient strength and durability.

Specific examples of the component (A-2) include, but are not limited to, methyltrimethoxysilane, dimethyldimethoxysilane, phenyltrimethoxysilane, methyltriethoxysilane, dimethyldiethoxysilane, phenyltriethoxysilane, hexyltrimethoxysilane, hexyltriethoxysilane, decyltrimethoxysilane, trifluoropropyltrimethoxysilane, vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, 3-ureidopropyltriethoxysilane, 3-mercaptopropylmethyldimethoxysilane, 3-mercaptopropyltrimethoxysilane, bis(triethoxysilylpropyl)tetrasulfide, 3-isocyanatopropyltriethoxysilane, and the like.

### Components (B), (D), and (E)

The method for producing the film-forming organopolysiloxane emulsion composition of the present invention can use one or both of the following (B-1) and (B-2) as the (B) cationic surfactant,
(B-1) a cationic surfactant represented by Q¹₃(CH₃)N⁺·X⁻: 0 to 30 parts by mass,
(B-2) a cationic surfactant represented by Q²_{α}(CH₃)_{4-α}N⁺·X⁻: 0 to 30 parts by mass,
   wherein Q¹ represents a same or different kind of monovalent organic group having 6 to 30 carbon atoms; Q² represents a monovalent organic group having 6 to 30 carbon atoms; X each independently represents a halogen atom or a monovalent carboxyl group having 1 to 6 carbon atoms; and "α" represents an integer of 1 or 2, provided that a total amount of (B-1) and (B-2) is 0.1 to 30 parts by mass.

Additionally, in any of the steps (I) to (III), the (E) nonionic surfactant can further be added in an amount of 0.1 to 30 parts by mass relative to 100 parts by mass of the (A-1) and (A-2) in total.

Furthermore, a nonionic surfactant represented by the following formula can also be used as the component (E),

R³O(EO)ₚ(PO)_{q}H

wherein R³ represents a linear or branched alkyl group having 8 to 30 carbon atoms; EO represents an ethylene oxide group and PO represents a propylene oxide group, EO and PO being optionally arranged randomly or in blocks; and "p" and "q" each independently represents an integer of 0 to 100, provided p+q>0.

The colloidal silica with the particle surface thereof treated with oxide of a metal other than silicon can also be used as the component (D).

The components (B), (D), and (E) to be used for the method for producing the emulsion composition of the present invention are as described above.

### Components (C-1), (C-2), and (C-3)

The components (C-1), (C-2), and (C-3) are water used in the step (I), and steps (II) and (III) as necessary. A total usage amount of the components (C-1), (C-2), and (C-3) corresponds to the usage amount of the water as the component (C).

In the step (I), the usage amount of the water as the component (C-1) is 30 to 3,000 parts by mass relative to 100 parts by mass of the component (A), which varies depending on a type of an emulsifier to be used for reducing the size of the emulsion particle.

For example, in a case of using an emulsifier such as a high-pressure homogenizer, which applies pressure to reduce the size of the emulsion particle, the usage amount of the component (C-1) is, but not particularly limited to, 30 to 3,000 parts by mass relative to 100 parts by mass of the component (A). In a case of using a emulsifier which applies a shear force to reduce the size of the emulsion particle, such as a homo disperser (emulsifier including a circular disk with saw-toothed circumference), a homo-mixer (emulsifier including a rotor and a stator), and a colloid mill (emulsifier which delivers each component to a gap between a highspeed rotating disk and a fixed disk to emulsify the same), the usage amount of the component (C-1) is preferably 1 to 200 parts by mass, more preferably 2 to 100 parts by mass, and further preferably 5 to 50 parts by mass relative to 100 parts by mass of the component (A).

In the case of using an emulsifier which applies a shear force to reduce the size of the emulsion particle, adding 200 parts by mass or less of the component (C-1) leads to efficient action of the shear force to reduce the size of the emulsion particle, resulting in favorable stability of the emulsion composition.

Additionally, when the amount is 1 part by mass or more, O/W type emulsion can easily be obtained.

In the step (II), the component (C-2) may or may not be added, while the total usage amount of the components (C-1), (C-2), and (C-3) (namely, the water as the component (C)) is preferably 30 to 3,000 parts by mass relative to 100 parts by mass of the component (A).

In the case of adding the component (C-2), the usage amount of the component (C-2) may be adjusted as appropriate such that appropriate concentration and viscosity for the intended use can be obtained. Note that it is generally preferable to add the water as the component (C-2) when using an emulsifier such as a homo disperser, a homo-mixer, and a colloid mill.

In the step (III), the component (C-3) may or may not be added, while the total usage amount of the components (C-1), (C-2), and (C-3) (namely, the water as the component (C)) is preferably 30 to 3,000 parts by mass relative to 100 parts by mass of the component (A).

In the case of adding the component (C-3), the usage amount of the component (C-3) may be adjusted as appropriate such that appropriate concentration and viscosity for the intended use can be obtained. Note that when the colloidal silica as the component (D) is an aqueous dispersion, water in the colloidal silica aqueous dispersion is included in the component (C-3).

### Component (F)

In the method for producing the film-forming organopolysiloxane emulsion composition of the present invention, the (C-2) water is further added to the emulsion composition obtained in the step (II) as necessary, polymerization is performed in the presence of the (F) basic catalyst at 0 to 40°C for 1 to 150 hours, and neutralization is further performed.

In this event, one or both of ammonia and organic amine can be used as the (F) basic catalyst.

Examples of the basic catalyst (alkaline catalyst) as the component (F) include alkali metal hydroxides and alkaline earth metal hydroxides, such as lithium hydroxide, sodium hydroxide, potassium hydroxide, rubidium hydroxide, and cesium hydroxide, ammonia, organic amine, and the like. Examples of the organic amine include: alkanolamines such as monoethanolamine, diethanolamine, and triethanolamine; and alkyl amines such as monomethyl amine, diethyl amine, trimethyl amine, monoethyl amine, diethyl amine, and triethyl amine.

In order to control each amount of the cyclic siloxanes such as the octamethylcyclotetrasiloxane (D4), the decamethylcyclopentasiloxane (D5), and the dodecamethylcyclohexasiloxane (D6) in the emulsion composition to 1,000 ppm or less, the alkaline catalyst is preferably ammonia and/or triethanolamine, among which ammonia is further preferred.

Emulsion polymerization using common cationic surfactants as typified by cetyltrimethylammonium chloride and tallow trimethylammonium chloride has been reported a lot. Since these cationic emulsifying agents have weak catalytic action, a strong base such as alkali metal hydroxides and alkaline earth metal hydroxides as described above is generally used as a catalyst to supplement the catalytic action. However, in the present invention, the use of the component (B-1) can significantly improve the catalytic action, so that there is no need to use a strong base and only the use of ammonia and/or organic amine as a weak base can cause polymerization to sufficiently proceed. Accordingly, in order to allow the polymerization to proceed with less generation of the byproducts of the cyclic siloxanes (such as the octamethylcyclotetrasiloxane (D4), the decamethylcyclopentasiloxane (D5), and the dodecamethylcyclohexasiloxane (D6)), ammonia (ammonia water) and/or organic amine are preferably used as the alkaline catalyst. The use of the ammonia (ammonia water) is more preferred.

In the method for producing the film-forming organopolysiloxane emulsion composition of the present invention, the emulsion composition preferably contains the octamethylcyclotetrasiloxane (D4), the decamethylcyclopentasiloxane (D5), and the dodecamethylcyclohexasiloxane (D6) each in an amount of 1,000 ppm or less. Additionally, the emulsion composition preferably contains the hexamethylcyclotrisiloxane (D3), the octamethylcyclotetrasiloxane (D4), the decamethylcyclopentasiloxane (D5), the dodecamethylcyclohexasiloxane (D6), the tetradecamethylcycloheptasiloxane (D7), the hexadecamethylcyclooctasiloxane (D8), the octadecamethylcyclononasiloxane (D9), and the eicosamethylcyclodecasiloxane (D10) in a total amount of 1,000 ppm or less.

The alkaline catalyst is preferably used in an amount of 0.1 to 10 equivalent, further preferably 0.2 to 5 equivalent, relative to a molar sum of the cationic surfactants as the components (B-1) and (B-2).

When the usage amount is 0.1 equivalent or more relative to the molar sum of the cationic surfactants as the components (B-1) and (B-2), the emulsion composition containing highly polymerized organopolysiloxane can be obtained in a short time.

Moreover, when the usage amount is 10 equivalent or less relative to the molar sum of the cationic surfactants as the components (B-1) and (B-2), the emulsion composition has favorable stability, and the amount of the byproducts of the cyclic siloxanes (such as the octamethylcyclotetrasiloxane (D4), the decamethylcyclopentasiloxane (D5), and the dodecamethylcyclohexasiloxane (D6)) can be reduced to 1,000 ppm or less.

It should be noted that the usage amount of the alkaline catalyst is not limited to the above, and may be outside the above usage amount range if necessary. Moreover, the alkaline catalyst to be used may be the above-described alkali metal hydroxides or alkaline earth metal hydroxides when the intended use does not limit the amount of the cyclic siloxanes (such as the octamethylcyclotetrasiloxane (D4), the decamethylcyclopentasiloxane (D5), and the dodecamethylcyclohexasiloxane (D6)).

Moreover, in the case of adding the alkaline catalyst to the emulsion composition, the alkaline catalyst to be used may be diluted with water in advance. In this case, the amount of the water used for dilution is not particularly limited as long as it is within the range of the component (C), i.e. 30 to 3,000 parts by mass relative to 100 parts by mass of the component (A). In this manner, the proper concentration of the alkaline catalyst can be obtained and the emulsion composition is stabilized and easy to handle.

The organopolysiloxane with the terminal blocked with a silanol group as the component (A-1), the organoalkoxysilane as the component (A-2), the cationic surfactant as the component (B), and the water as the component (C-1) are emulsified by an emulsifier such as a homogenizer, a homo disperser, a homo-mixer, a colloid mill, and a line mixer, to prepare the uniform emulsion composition. The water as the component (C-2) is further added to the obtained emulsion composition as necessary. Then, polymerization is performed in the presence of the alkaline catalyst as the component (F) at 0 to 40°C for 1 to 150 hours, and neutralization is further performed. Thereafter, the colloidal silica as the component (D) and the (C-3) water (if necessary) are added.

Moreover, the polymerization temperature is 0 to 40°C, preferably 5 to 30°C. When the polymerization temperature is 0°C or higher, the polymerization quickly proceeds, which is practical, and the emulsion does not freeze and has favorable stability. When the polymerization temperature is 40°C or lower, the emulsion has favorable stability and the amount of the byproducts of the cyclic siloxanes (such as the octamethylcyclotetrasiloxane (D4), the decamethylcyclopentasiloxane (D5), and the dodecamethylcyclohexasiloxane (D6)) can be reduced to 1,000 ppm or less.

Moreover, the polymerization time is 1 to 150 hours, preferably 1 to 120 hours. 1 hour or longer time results in sufficient polymerization, while 150 hours or shorter time is industrially sufficient.

After a predetermined polymerization time, neutralization can be performed to stop the polymerization reaction. The neutralization herein can be performed by adding an acidic compound. Examples of the acidic compound (neutralizer) include hydrochloric acid, formic acid, acetic acid, propionic acid, lactic acid, and the like, among which hydrochloric acid, formic acid, and acetic acid are preferred. Note that instead of the acidic compound, an ion exchange resin can also be used for the neutralization.

The highly polymerized organopolysiloxane emulsion composition of the present invention obtained by the above method is suitably used as fiber treatment agents, mold releasing agents, water repellent agents, raw materials for cosmetics, etc., and treating various types of fibers, leather, paper, hair, etc. using the same can impart excellent flexibility, slipperiness, water repellence, voluminous appearance, etc. Note that examples of fibers include, but are not limited to, natural fibers such as cotton, hemp, silk, and wool, synthetic fibers such as polyester, polyamide, polyacrylonitrile, polyethylene, polypropylene, vinylon, polyvinyl chloride, and spandex, semi-synthetic fibers such as acetate, and the like.

To the highly polymerized organopolysiloxane emulsion composition of the present invention, various thickeners, pigments, dyes, penetrating agents, antistatic agents, defoaming agents, flame retardants, antibacterial agents, preservatives, water repellent agents, crosslinking agents, adhesion improvers, other silicone oils, silicone resins, silica, acrylic resins, urethane resins, etc. can be added as appropriate.

The highly polymerized organopolysiloxane emulsion composition of the present invention can form a film after dried, and can be used for treating or impregnating a surface of various substrates such as fibers, paper, metal, wood, rubber, plastic, glass, etc. As a method for applying the same to a substrate, various conventionally known coating methods such as dipping, spraying, roll coating, bar coating, and brush coating are applicable.

Moreover, the highly polymerized organopolysiloxane emulsion composition of the present invention may have antiviral performance with an antiviral activity value Mv of 2.0 or more based on JIS L 1922. It is considered that this antiviral performance is exhibited by the cationic surfactant in the emulsion composition. Additionally, since the highly polymerized organopolysiloxane emulsion composition of the present invention is capable of forming a film, a film that contains a substance exhibiting antiviral performance can be formed by applying the emulsion composition to an object substance, such as a substrate, to which an antiviral property is desired to be imparted. As a result, excellent durability and long-term antiviral performance can be expected.

### EXAMPLE

Hereinafter, the present invention will be specifically described with reference to Examples and Comparative Examples. However, the present invention is not limited to the following Examples. Incidentally, unless otherwise especially noted, "%" in the following Examples means "mass%".

### Examples 1 to 25, Comparative Examples 1 to 8

Emulsions A to Y of Examples 1 to 25, and emulsions CA to CF of Comparative Examples 1 to 4, 6, and 7 were prepared as follows. Note that emulsion was not obtained in Comparative Examples 5, 8. Tables 1 to 3 show the blending amount (parts by mass) of each component relative to 100 parts by mass of the component (A).

### Example 1

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, a potassium hydroxide aqueous solution prepared by diluting 1.4 g of 85% potassium hydroxide (component (F-1)) in advance with 60.0 g of ion-exchanged water (component (C-2)) was added thereto. Thereafter, the liquid temperature was lowered to 15°C, at which polymerization was carried out for 24 hours, and neutralization with 1.4 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation: containing the component (C-3), the same applies hereinafter) was added and homogenously dispersed using a homo-mixer, thereby obtaining the emulsion A. Nonvolatile matter of the emulsion A was 39.3% after drying at 105°C for 3 hours.

### Example 2

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 1.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 1.4 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion B. Nonvolatile matter of the emulsion B was 40.0% after drying at 105°C for 3 hours.

### Example 3

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, a triethanolamine aqueous solution prepared by diluting 3.2 g of triethanolamine (component (F-3)) with 60.0 g of ion-exchanged water (component (C-2)) was added thereto. Thereafter, the liquid temperature was lowered to 15°C, at which polymerization was carried out for 24 hours, and neutralization with 1.4 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion C. Nonvolatile matter of the emulsion C was 40.2% after drying at 105°C for 3 hours.

### Example 4

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion D. Nonvolatile matter of the emulsion D was 40.4% after drying at 105°C for 3 hours.

### Example 5

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene lauryl ether (component (E-1)) (EMULGEN 109P: produced by Kao Corporation), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion E. Nonvolatile matter of the emulsion E was 42.0% after drying at 105°C for 3 hours.

### Example 6

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion F. Nonvolatile matter of the emulsion F was 42.0% after drying at 105°C for 3 hours.

### Example 7

In organopolysiloxane with both terminals blocked with silanol groups (component (A-1-2)) having a viscosity at 25°C of 50,000 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-2)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion G. Nonvolatile matter of the emulsion G was 42.0% after drying at 105°C for 3 hours.

### Example 8

In organopolysiloxane with both terminals blocked with silanol groups (component (A-1-3)) having a viscosity at 25°C of 200,000 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-3)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion H. Nonvolatile matter of the emulsion H was 42.0% after drying at 105°C for 3 hours.

### Example 9

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 30.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion I. Nonvolatile matter of the emulsion I was 43.4% after drying at 105°C for 3 hours.

### Example 10

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 100.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion J. Nonvolatile matter of the emulsion J was 40.0% after drying at 105°C for 3 hours.

### Example 11

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 298.5 g of this organopolysiloxane (component (A-1-1)), 1.5 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion K. Nonvolatile matter of the emulsion K was 42.0% after drying at 105°C for 3 hours.

### Example 12

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 90.0 g of ion-exchanged water (component (C-1)) were homogeneously emulsified and dispersed using a homo-mixer and a disperser, thereby preparing emulsion. To this emulsion, 285.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion L. Nonvolatile matter of the emulsion L was 42.0% after drying at 105°C for 3 hours.

### Example 13

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene stearyl ether (component (E-3)) (EMULGEN 350: produced by Kao Corporation), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion M. Nonvolatile matter of the emulsion M was 42.0% after drying at 105°C for 3 hours.

### Example 14

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 30.0 g of an ethanol product containing a 95% trioctylmethylammonium chloride active component (component (B-1-1)) (TOMAC: produced by Linyi Connect Chemical Technology Co., Ltd), 30.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 0.4 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 0.4 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion N. Nonvolatile matter of the emulsion N was 41.1% after drying at 105°C for 3 hours.

### Example 15

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 1.5 g of an ethanol product containing a 95% trioctylmethylammonium chloride active component (component (B-1-1)) (TOMAC: produced by Linyi Connect Chemical Technology Co., Ltd), 1.5 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 7.4 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 8.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion O. Nonvolatile matter of the emulsion O was 44.3% after drying at 105°C for 3 hours.

### Example 16

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 11.1 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 12.9 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion P. Nonvolatile matter of the emulsion P was 42.6% after drying at 105°C for 3 hours.

### Example 17

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 22.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 25.8 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion Q. Nonvolatile matter of the emulsion Q was 43.2% after drying at 105°C for 3 hours.

### Example 18

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 180.0 g of an aqueous dispersion containing a 20% colloidal silica active component (component (D-2)) (SNOWTEX C: produced by Nissan Chemical Corporation) was added and homogeneously dispersed using a homo-mixer, thereby obtaining the emulsion R. Nonvolatile matter of the emulsion R was 39.4% after drying at 105°C for 3 hours.

### Example 19

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was increased to 30°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion S. Nonvolatile matter of the emulsion S was 42.0% after drying at 105°C for 3 hours.

### Example 20

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 2 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion T. Nonvolatile matter of the emulsion T was 42.0% after drying at 105°C for 3 hours.

### Example 21

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 144 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion U. Nonvolatile matter of the emulsion U was 42.0% after drying at 105°C for 3 hours.

### Example 22

In organopolysiloxane (component (A-1-4)) having a viscosity at 25°C of 1,500 mPa·s and having a branch unit (in the general formula (1), R¹=methyl group, R²=methoxy group, "a"=3, "b"=450, "c"=1, and "d"=0), heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 300.0 g of this organopolysiloxane (component (A-1-4)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion V. Nonvolatile matter of the emulsion V was 42.0% after drying at 105°C for 3 hours.

### Example 23

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 8.0 g of stearyltrimethylammonium chloride (component (B-2-2)) containing a 98% active component (produced by Tokyo Chemical Industry Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion W. Nonvolatile matter of the emulsion W was 41.3% after drying at 105°C for 3 hours.

### Example 24

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of trioctadecylmethylammonium chloride (component (B-1-2)) containing a 95% active component (produced by AstaTech Inc.), 8.0 g of stearyltrimethylammonium chloride (component (B-2-2)) containing a 98% active component (produced by Tokyo Chemical Industry Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion X. Nonvolatile matter of the emulsion X was 40.3% after drying at 105°C for 3 hours.

### Example 25

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of trioctadecylmethylammonium chloride (component (B-1-2)) containing a 95% active component (produced by AstaTech Inc.), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion Y. Nonvolatile matter of the emulsion Y was 41.1% after drying at 105°C for 3 hours.

### Comparative Example 1

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion CA. Nonvolatile matter of the emulsion CA was 41.1% after drying at 105°C for 3 hours.

### Comparative Example 2

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 2 hours, and neutralization with 2.6 g of acetic acid was performed to stop the polymerization. Next, 84.0 g of ion-exchanged water (component (C-3)) was added and homogeneously dispersed using a homo-mixer, thereby obtaining the emulsion CB. Nonvolatile matter of the emulsion CB was 39.6% after drying at 105°C for 3 hours.

### Comparative Example 3

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 84.0 g of ion-exchanged water (component (C-3)) was added and homogeneously dispersed using a homo-mixer, thereby obtaining the emulsion CC. Nonvolatile matter of the emulsion CC was 39.6% after drying at 105°C for 3 hours.

### Comparative Example 4

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 330.0 g of ion-exchanged water (component (C-2)) was further added and homogeneously dispersed using a homo-mixer. Then, an ammonia aqueous solution prepared by diluting 2.2 g of a 30% ammonia aqueous solution (component (F-2)) in advance with 60.0 g of ion-exchanged water (component (C-2)) was added thereto. Thereafter, the liquid temperature was lowered to 15°C, at which polymerization was carried out for 24 hours, and neutralization with 2.6 g of acetic acid was performed to stop the polymerization. Next, 84.0 g of ion-exchanged water (component (C-3)) was added and homogeneously dispersed using a homo-mixer, thereby obtaining the emulsion CD. Nonvolatile matter of the emulsion CD was 38.6% after drying at 105°C for 3 hours.

### Comparative Example 5

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 294.0 g of this organopolysiloxane (component (A-1-1)), 6.0 g of triethoxyphenylsilane (component (A-2-1)), 120.0 g of an ethanol product containing a 95% trioctylmethylammonium chloride active component (component (B-1-1)) (TOMAC: produced by Linyi Connect Chemical Technology Co., Ltd), and 45.0 g of ion-exchanged water (component (C-1)) were tried to be homogeneously emulsified and dispersed using a homo-mixer and a disperser to prepare emulsion, but uniform emulsion could not be obtained because of quick separation. Therefore, evaluation of emulsion was not performed.

### Comparative Example 6

In dimethylpolysiloxane with both terminals blocked with trimethylsilyl groups (component (A-3)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 300.0 g of this dimethylpolysiloxane (component (A-3)), 9.0 g of an ethanol product containing a 95% trioctylmethylammonium chloride active component (component (B-1-1)) (TOMAC: produced by Linyi Connect Chemical Technology Co., Ltd), 9.0 g of an ethanol product containing an 80% behenyltrimethylammonium chloride active component (component (B-2-1)) (LIPOQUAD 22-80: produced by Lion Specialty Chemicals Co., Ltd.), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 390.0 g of ion-exchanged water (component (C-2)) was further added and homogeneously dispersed using a homo-mixer. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion CE. Nonvolatile matter of the emulsion CE was 41.9% after drying at 105°C for 3 hours.

### Comparative Example 7

In dimethylpolysiloxane with both terminals blocked with trimethylsilyl groups (component (A-3)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 300.0 g of this dimethylpolysiloxane (component (A-3)), 24.0 g of polyoxyethylene tridecyl ether (component (E-2)) (Newcol 1310: produced by NIPPON NYUKAZAI CO., LTD.), and 45.0 g of ion-exchanged water (component (C-1)) were homogeneously emulsified and dispersed using a homo-mixer and a disperser, thereby preparing emulsion. To this emulsion, 390.0 g of ion-exchanged water (component (C-2)) was further added and homogeneously dispersed using a homo-mixer. Next, 120.0 g of an aqueous dispersion containing a 30% colloidal silica active component (component (D-1)) (SNOWTEX AK-YL: produced by Nissan Chemical Corporation) was added and homogenously dispersed using a homo-mixer, thereby obtaining the emulsion CF. Nonvolatile matter of the emulsion CF was 41.0% after drying at 105°C for 3 hours.

### Comparative Example 8

In organopolysiloxane with both terminals blocked with silanol groups (component (A-1-1)) having a viscosity at 25°C of 1,500 mPa·s, heat mixing was performed in advance at 150°C under a reduced pressure of 10 mmHg or less to reduce each amount of cyclic siloxanes such as octamethylcyclotetrasiloxane (D4), decamethylcyclopentasiloxane (D5), and dodecamethylcyclohexasiloxane (D6) to less than 10 ppm (detection limit). 300.0 g of this organopolysiloxane (component (A-1-1)), 6.0 g of polyoxyethylene tridecyl ether (component (E-2)) (Newcol 1310: produced by NIPPON NYUKAZAI CO., LTD.), 10.5 parts of sodium dodecylbenzene sulfonate as an anionic surfactant, and 18.0 g of ion-exchanged water (component (C-1)) were emulsified using a homo disperser. To this emulsion, 254.7 g of ion-exchanged water (component (C-2)) was further added and homogeneously dispersed using a homo-mixer. Then, 3.6 g of concentrated hydrochloric acid was added as an acidic catalyst. Thereafter, the liquid temperature was lowered to 10°C, at which polymerization was carried out for 22 hours, and neutralization with 7.2 g of triethanolamine was performed to stop the polymerization. Next, 120.0 g of an aqueous dispersion containing a 30% colloidal silica active component (component (D-1)) (SNOWTEX AK-YL: produced by Nissan Chemical Corporation) was added and tried to be homogenously dispersed using a homo-mixer, but uniform emulsion could not be obtained because of quick separation. Therefore, evaluation of emulsion was not performed.

### Emulsion Evaluation

Physical properties and characteristics of the respective emulsions obtained in the above Examples 1 to 25 and Comparative Examples 1 to 4, 6, and 7 were measured by the following evaluation methods, and the results are shown in Tables 1 to 3.

Note that each of the obtained emulsion compositions was weighed to have the nonvolatile matter of 8.0 g on a 15 cm×10 cm PP (polypropylene) tray, and dried at 25°C for 48 hours to evaporate water. As a result, a film in a rubber form was formed in Examples 1 to 25 and Comparative Example 3, while flowable liquid was obtained in Comparative Examples 1, 2, and 4. In the column of "extracted viscosity (mPa·s)" in Tables 1 to 3, the extracted viscosity of the emulsion that could be measured by the following method, or the form of the film whose viscosity could not be measured is shown.

### Viscosity of Extracted Organopolysiloxane

300 g of each emulsion composition was added to 2L of IPA under stirring to cause emulsion destruction, thereby extracting organopolysiloxane. This organopolysiloxane was dried at 105°C for 3 hours, and then the viscosity thereof measured at 25°C using a BM-type rotational viscometer (TVB-10M). Note that the viscosity of 300,000 mPa·s or more includes all of unmeasurable viscosity even by using a rotor M4, which can measure the highest viscosity range of the BM-type rotational viscometer (measurement upper limit viscosity: 2,000,000 mPa·s), unmeasurable viscosity of the component winding around the rotor of the BM-type rotational viscometer, and unmeasurable viscosity of the component unable to dissolve in toluene.

### Average Particle Size of Emulsion

The particle size corresponds to a cumulative value up to 50% in a volume-based particle distribution measured by using a laser diffraction/scattering particle size distribution analyzer (produced by HORIBA, Ltd., Partica LA-960).

### Cyclic Siloxane Content

0.1 g of each emulsion composition was extracted (shook for 3 hours) with 10 mL of acetone containing 20 ppm (mass) of tetradecane as an internal standard, and then allowed to stand overnight. Thereafter, the acetone layer was collected, and the amounts of cyclic siloxanes (hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), hexadecamethylcyclooctasiloxane (D8), octadecamethylcyclononasiloxane (D9), and eicosamethylcyclodecasiloxane (D10)) were determined by gas chromatography analysis (Agilent 7890B (produced by Agilent Technologies)) (mass conversion value).

### Film Formability

Each emulsion composition was weighed to have the nonvolatile matter of 8.0 g on a 15 cm×10 cm PP (polypropylene) tray, dried at 25°C for 48 hours, further dried at 105°C for 1 hour, and evaluated for whether a film was formed.
A: Uniform film formed with strength enabling easy separation thereof from a disposable tray.
B: Uniform film formed, which cannot be peeled from a disposable tray or deforms during peeling.
C: Uniform film not formed.

### Evaluation of Physical Properties of Film

Hardness (Type C durometer hardness), tensile strength, and elongation at break of the film prepared as described above were measured based on JIS K6249. The evaluation results are together shown in Tables 1 to 3.

### Storage Stability of Emulsion (25°C)

100 g of each emulsion composition was placed in a glass bottle, and left to stand and stored in a thermostatic chamber at 25°C. Then, the appearance was visually observed and the nonvolatile matter in the upper and lower layers was measured after 3 months, 6 months, and 12 months, thereby evaluating the storage stability based on the following evaluation criteria.

### <Evaluation Criteria>

A: No concentration separation recognized between the upper and lower layers.
B: Slight concentration separation recognized between the upper and lower layers.
C: Complete separation into two layers.

### Storage Stability of Emulsion (40°C)

100 g of each emulsion composition was placed in a glass bottle, and left to stand and stored in a thermostatic chamber at 40°C for 30 days. Thereafter, the appearance was visually observed and the nonvolatile matter in the upper and lower layers was measured, thereby evaluating the storage stability based on the following evaluation criteria.

### <Evaluation Criteria>

A: No concentration separation recognized between the upper and lower layers.
B: Slight concentration separation recognized between the upper and lower layers.
C: Complete separation into two layers.

**[Table 1]**

| Composition (parts by mass) | | Ex.1 | Ex.2 | Ex.3 | Ex.4 | Ex.5 | Ex.6 | Ex.7 | Ex. 8 | Ex. 9 | Ex.10 | Ex.11 | Ex.12 | Ex.13 |
|---|---|---|---|---|---|---|---|---|---|---|---|---|---|---|
| Component (A) | (A-1) | 98.0 | 98.0 | 98.0 | 98.0 | 98.0 | 98.0 | 98.0 | 98.0 | 98.0 | 98.0 | 99.5 | 98.0 | 98.0 |
| | (A-2) | 2.0 | 2.0 | 2.0 | 2.0 | 2.0 | 2.0 | 2.0 | 2.0 | 2.0 | 2.0 | 0.5 | 2.0 | 2.0 |
| Component (B) | (B-1) | 2.9 | 2.9 | 2.9 | 2.9 | 2.9 | 2.9 | 2.9 | 2.9 | 2.9 | 2.9 | 2.9 | 2.9 | 2.9 |
| | (B-2) | | | | 2.4 | 2.4 | 2.4 | 2.4 | 2.4 | 2.4 | 2.4 | 2.4 | 2.4 | 2.4 |
| Component (C) | (C-1) | 15.0 | 15.0 | 15.0 | 15.0 | 15.0 | 15.0 | 15.0 | 15.0 | 15.0 | 15.0 | 15.0 | 30.0 | 15.0 |
| | (C-2) | 130.0 | 130.0 | 130.0 | 130.0 | 130.0 | 130.0 | 130.0 | 130.0 | 130.0 | 130.0 | 130.0 | 115.0 | 130.0 |
| | (C-3) | 28.0 | 28.0 | 28.0 | 28.0 | 28.0 | 28.0 | 28.0 | 28.0 | 7.0 | 70.0 | 28.0 | 28.0 | 28.0 |
| Component (D) | | 12.0 | 12.0 | 12.0 | 12.0 | 12.0 | 12.0 | 12.0 | 12.0 | 3.0 | 30.0 | 12.0 | 12.0 | 12.0 |
| Component (E) | | | | | | 8.0 | 8.0 | 8.0 | 8.0 | 8.0 | 8.0 | 8.0 | 8.0 | 8.0 |
| Nonvolatile matter (%) | | 39.3 | 40.0 | 40.2 | 40.4 | 42.0 | 42.0 | 42.0 | 42.0 | 43.4 | 40.0 | 42.0 | 42.0 | 42.0 |
| Polymerization conditions | Temperature | 15°C | 15°C | 15°C | 15°C | 15°C | 15°C | 15°C | 15°C | 15°C | 15°C | 15°C | 15°C | 15°C |
| | Time | 24h | 24h | 24h | 24h | 24h | 24h | 24h | 24h | 24h | 24h | 24h | 24h | 24h |
| Extracted viscosity (mPa·s) | | rubber | rubber | rubber | rubber | rubber | rubber | rubber | rubber | rubber | rubber | 361000 | rubber | rubber |
| Average particle size(nm) | | 300 | 300 | 300 | 460 | 300 | 220 | 440 | 770 | 220 | 220 | 220 | 970 | 300 |
| Cyclic siloxane content (ppm) | D4 | 4730 | 120 | 130 | 120 | 110 | 110 | 110 | 110 | 110 | 60 | 110 | 110 | 110 |
| | D5 | 630 | 20 | 20 | 20 | 20 | 20 | 20 | 20 | 20 | 10 | 20 | 20 | 20 |
| | D6 | 530 | 20 | 20 | 20 | 20 | 20 | 20 | 20 | 20 | 10 | 20 | 20 | 20 |
| | ∑(D3~10) | >1000 | <1000 | <1000 | <1000 | <1000 | <1000 | <1000 | <1000 | <1000 | <1000 | <1000 | <1000 | <1000 |
| Salt concentration in emulsion composition (mass%) | | 0.2 | 0.2 | 0.5 | 0.3 | 0.3 | 0.3 | 0.3 | 0.3 | 0.4 | 0.3 | 0.3 | 0.3 | 0.3 |
| Film formability | | A | A | A | A | A | A | A | A | A | A | A | A | A |
| Physical properties of film | Hardness | 45 | 40 | 38 | 41 | 43 | 43 | 43 | 43 | 43 | 66 | 30 | 44 | 41 |
| | Tensile strength (MPa) | 0.7 | 0.5 | 0.5 | 0.6 | 0.5 | 0.6 | 0.6 | 0.6 | 0.5 | 0.9 | 0.5 | 0.5 | 0.5 |
| | Elongation (%) | 480 | 550 | 590 | 650 | 600 | 690 | 690 | 690 | 780 | 340 | 900 | 640 | 620 |
| Storage stability of emulsion | 25 ° C×3 months | A | A | A | A | A | A | A | A | A | A | A | A | A |
| | 25°C×6 months | B | B | B | A | A | A | A | A | A | A | A | B | A |
| | 25°Cx12 months | B | B | B | A | A | A | A | A | A | A | A | B | A |
| | 40°Cx30 days | B | B | B | B | B | A | A | A | A | A | A | B | A |

**[Tabele 2]**

| Composition (parts by mass) | | Ex.14 | Ex.15 | Ex.16 | Ex.17 | Ex.18 | Ex.19 | Ex.20 | Ex.21 | Ex.22 | Ex.23 | Ex.24 | Ex.25 |
|---|---|---|---|---|---|---|---|---|---|---|---|---|---|
| Component (A) | (A-1) | 98.0 | 98.0 | 98.0 | 98.0 | 98.0 | 98.0 | 98.0 | 98.0 | 100.0 | 98.0 | 98.0 | 98.0 |
| | (A-2) | 2.0 | 2.0 | 2.0 | 2.0 | 2.0 | 2.0 | 2.0 | 2.0 | | 2.0 | 2.0 | 2.0 2.9 |
| Component (B) | (B-1) | 0.5 | 9.5 | 2.9 | 2.9 | 2.9 | 2.9 | 2.9 | 2.9 | 2.9 | 2.9 | 2.9 | 2.4 |
| | (B-2) | 0.4 | 9.5 | 2.4 | 2.4 | 2.4 | 2.4 | 2.4 | 2.4 | 2.4 | 2.6 | 2.6 | |
| Component (C) | (C-1) | 15.0 | 15.0 | 15.0 | 15.0 | 15.0 | 15.0 | 15.0 | 15.0 | 15.0 | 15.0 | 15.0 | 15.0 |
| | (C-2) | 130.0 | 130.0 | 130.0 | 130.0 | 130.0 | 130.0 | 130.0 | 130.0 | 130.0 | 130.0 | 130.0 | 130.0 |
| | (C-3) | 28.0 | 28.0 | 28.0 | 28.0 | 98.0 | 28.0 | 28.0 | 28.0 | 28.0 | 28.0 | 28.0 | 28.0 |
| Component (D) | | 12.0 | 12.0 | 12.0 | 12.0 | 12.0 | 12.0 | 12.0 | 12.0 | 12.0 | 12.0 | 12.0 | 12.0 |
| Component | (E) | 8.0 | 8.0 | 8.0 | 8.0 | 8.0 | 8.0 | 8.0 | 8.0 | 8.0 | 8.0 | 8.0 | 8.0 |
| Nonvolatile matter(%) | | 41.1 | 44.3 | 42.6 | 43.2 | 39.4 | 42.0 | 42.0 | 42.0 | 42.0 | 41.3 | 40.3 | 41.1 |
| Polymerization conditions | Temperature | 15°C | 15°C | 15°C | 15°C | 15°C | 30°C | 15°C | 15°C | 15°C | 15°C | 15°C | 15°C |
| | Time | 24h | 24h | 24h | 24h | 24h | 24h | 2h | 144h | 24h | 24h | 24h | 24h |
| Extracted viscosity(mPa·s) | | rubber | rubber | rubber | rubber | rubber | rubber | rubber | rubber | rubber | rubber | rubber | rubber |
| Average particle size(nm) | | 280 | 270 | 220 | 220 | 240 | 220 | 220 | 220 | 220 | 330 | 350 | 300 |
| Cyclic siloxane content (ppm) | D4 | 80 | 160 | 40 | 360 | 110 | 300 | 30 | 40 | 110 | 110 | 120 | 120 |
| | D5 | 20 | 20 | 10 | 400 | 20 | 70 | 10 | 10 | 20 | 20 | 20 | 20 |
| | D6 | 20 | 20 | 10 | 740 | 20 | 90 | 10 | 10 | 20 | 20 | 20 | 20 |
| | ∑(D3~10) | <1000 | <1000 | <1000 | <1000 | <1000 | <1000 | <1000 | <1000 | <1000 | <1000 | <1000 | <1000 |
| Salt concentration in emulsion composition(mass%) | | 0.1 | 1.0 | 1.5 | 2.9 | 0.3 | 0.3 | 0.3 | 0.3 | 0.3 | 0.3 | 0.3 | 0.3 |
| Film formability | | A | A | A | A | A | A | A | A | A | A | A | A |
| Physical properties of film | Hardness | 38 | 48 | 43 | 43 | 43 | 50 | 26 | 52 | 43 | 39 | 42 | 41 |
| | Tensile strength (MPa) | 0.4 | 0.6 | 0.6 | 0.6 | 0.6 | 0.6 | 0.4 | 0.6 | 0.6 | 0.6 | 0.5 | 0.6 |
| | Elongation (%) | 720 | 450 | 450 | 390 | 660 | 500 | 730 | 440 | 720 | 690 | 640 | 700 |
| Storage stability of emulsion | 25°C×3 months | A | A | A | A | A | A | A | A | A | A | A | A |
| | 25°Cx6 months | A | A | A | A | B | A | A | A | A | A | A | A |
| | 25°C×12 months | A | A | A | A | B | A | A | A | A | A | A | A |
| | 40°C×30 days | A | A | A | A | B | A | A | A | A | A | A | A |

**[Tabele 3]**

| Composition (parts by mass) | | Comp. Ex.1 | Comp. Ex.2 | Comp. Ex.3 | Comp. Ex. 4 | Comp. Ex.5 | Comp. Ex.6 | Comp. Ex.7 | Comp . Ex. 8 |
|---|---|---|---|---|---|---|---|---|---|
| component (A) | (A-1) | 98.0 | 98.0 | 98.0 | 98.0 | 98.0 | | | 100 |
| | (A-2) | 2.0 | 2.0 | 2.0 | 2.0 | 2.0 | | | |
| Low viscosity polysiloxane (A-3) | | | | | | | 100 | 100 | |
| Component (B) | (B-1) | | 2.9 | 2.9 | | 38.0 | 2.9 | | |
| | (B-2) | | 2.4 | 2.4 | | | 2.4 | | |
| Component (C) | (C-1) | 15.0 | 15.0 | 15.0 | 15.0 | 15.0 | 15.0 | 15.0 | 6.0 |
| | (C-2) | 130.0 | 130.0 | 130.0 | 130.0 | | 130.0 | 130.0 | 84.9 |
| | (C-3) | 28.0 | 28.0 | 28.0 | 28.0 | | 28.0 | 28.0 | 28.0 |
| Component (D) | | 12.0 | | | | | 12.0 | 12.0 | 12.0 |
| Component (E) | | 8.0 | 8.0 | 8.0 | 8.0 | | 8.0 | 8.0 | 2.0 |
| Anionic surfactant | | | | | | | | | 3.5 |
| Nonvolatile matter(%) | | 41.1 | 39.6 | 39.6 | 38.6 | | 41. 9 | 41.0 | Uniform film not obtained |
| Polymerization conditions | Temperature | 15°C | 15°C | 15°C | 15°C | | | | |
| | Time | 24h | 2h | 24h | 24h | | | | |
| Extracted viscosity(mPa·s) | | 1590 | 27300 | rubber | 1520 | | 1640 | 1570 | |
| Average particle size (nm) | | 360 | 300 | 300 | 360 | | 300 | 310 | |
| Cyclic siloxane content (ppm) | D4 | 110 | 30 | 110 | 110 | | 30 | 30 | |
| | D5 | 20 | 10 | 10 | 20 | | 10 | 10 | |
| | D6 | 20 | 10 | 10 | 20 | | 10 | 10 | |
| | Σ(D3∼10) | <1000 | <1000 | <1000 | <1000 | | <1000 | <1000 | |
| Salt concentration in emulsion composition(mass%) | | 0.3 | 0.3 | 0.3 | 0.4 | | 0 | 0 | |
| Film formability | | C | C | B | C | Uniform film not obtained | C | C | |
| Physical properties of film | Hardness | unmeasurable | unmeasurable | 3 | unmeasurable | | unmeasurable | unmeasurable | |
| | Tensile strength (MPa) | unmeasurable | unmeasurable | 0.1 | unmeasurable | | unmeasurable | unmeasurable | |
| | Elongation (%) | unmeasurable | unmeasurable | 560 | unmeasurable | | unmeasurable | unmeasurable | |
| Storage stability of emulsion | 25°C×3 months | A | A | A | A | | A | A | |
| | 25°C×6 months | B | A | A | B | | A | A | |
| | 25°C×12 months | B | A | A | B | | A | A | |
| | 40°C×30 days | B | A | A | B | | A | A | |

In the column of "extracted viscosity (mPa·s)" in Tables 1 to 3, "rubber" means that the viscosity could not be measured by the above method, and the film was in a rubber form having a viscosity at 25°C of 300,000 mPa·s or more.

As shown in Tables 1 and 2, the film-forming organopolysiloxane (highly polymerized organopolysiloxane) emulsion compositions of the present invention in Examples 1 to 25 had strong film forming ability as well as excellent storage stability.

In contrast, as shown in Table 3, in Comparative Examples 1 and 4 using no cationic surfactant, the extracted organopolysiloxane had a low viscosity, a low molecular weight, and thus poorer film formability. In Comparative Examples 2 and 3 using the cationic surfactant but no colloidal silica, the extracted organopolysiloxane had a high viscosity. However, the viscosity at 25°C was less than 300,000 mPa·s and a uniform film could not be formed in Comparative Example 2, whereas the viscosity was sufficient but the hardness and tensile strength of the film were insufficient in Comparative Example 3. In Comparative Example 5 with the excessive blending amount of the component (B), the emulsion became unstable, and uniform emulsion could not be obtained. In Comparative Examples 6 and 7, instead of the component (A) of the present invention, the dimethylpolysiloxane with both terminals blocked with trimethylsilyl groups was used, which had low viscosity and failed to polymerize (polycondensation through dehydration or dealcoholization). In Comparative Examples 6 and 7, though silica was contained, a film having sufficient physical properties could not be obtained even by using the cationic surfactant alone or using also the nonionic surfactant in combination. In Comparative Example 8 using the anionic surfactant having strong catalytic action instead of the cationic surfactant, anionic emulsion polymerization with high viscosity proceeded at a lower temperature (10°C). However, addition of the colloidal silica made the emulsion unstable, making it impossible to obtain uniform emulsion. Accordingly, with the emulsion compositions obtained with the compositions of Comparative Examples 1 to 8, uniform emulsion could not be obtained in the first place, or a film was not formed, or a film, even when formed, had weak strength.

Moreover, in the emulsion A of Example 1 prepared by using potassium hydroxide as the (F) basic catalyst, the amount of the cyclic siloxanes D4 to D6 exceeded 5000 mass ppm, but the obtained film had good physical properties (hardness, tensile strength, and elongation at break) as well as good storage stability. Accordingly, the emulsion composition of the present invention enables the obtained film to have good physical properties and storage stability even when the low-molecular-weight cyclic siloxanes remain, and enables to omit a step of removing the low-molecular-weight cyclic siloxanes, leading to a reduced production cost.

On the other hand, in the emulsion B of Example 2 prepared by using ammonia as the (F) basic catalyst, the amount of the cyclic siloxanes D4 to D6 was significantly reduced to less than 200 mass ppm, and the obtained film had good physical properties and storage stability. Accordingly, it has been confirmed that with the method for producing the emulsion composition of the present invention, the use of the organopolysiloxane with a terminal blocked with an alkoxy and/or a silanol group as the emulsion raw material, i.e. the component (A-1), in which the amount of the low-molecular-weight cyclic polysiloxanes is reduced in advance, in combination with the appropriate basic catalyst can control each amount of the cyclic siloxanes D4 to D6 contained in the obtained emulsion composition to 1000 ppm or less, and also easily control the total amount of the cyclic siloxanes D3 to D10 contained in the emulsion composition to 1,000 ppm or less. Accordingly, the emulsion composition of the present invention and the method for producing the same are highly industrially useful.

### Antiviral Performance Test of Treated Fabric

Ion-exchanged water was added to the respective emulsion compositions F and Z, and the resultant was diluted to a solid content of 1% to prepare a test solution. A standard cotton cloth for antiviral performance test was immersed in the test solution for 10 seconds, then squeezed using rolls at a squeezing rate of 100%, and dried at 150°C for 2 minutes, thereby fabricating each test fabric. Each test fabric was subjected to the antiviral performance test by the following test method. Specifications/standards and the results are respectively shown in Tables 4 and 5.
Test Method: JIS L 1922:2016

### Measurement method of virus infectivity titer: Plaque assay

Test Virus: Influenza virus of Influenza A virus
(H3N2): ATCC VR-1679

**[Table 4]**

| Specifications/ standards | Antiviral activity value Mv | Description of effect |
|---|---|---|
| ISO 18184 Annex G | 3.0>Mv≥2.0 | Small effect |
| | Mv≥3.0 | Full effect |
| Certification standards of SEK mark textile products | Mv≥3.0 | |

**[Table 5]**

| | Antiviral activity value Mv | Certification standards of SEK mark textile products (Mv≥3.0) | ISO 18184 Annex G |
|---|---|---|---|
| Blank (untreated) | 1.1 | Outside certification standards | Nonstandard |
| Emulsion F | 3.7 | Within certification standards | Full effect |
| Emulsion Z | 0.3 | Outside certification standards | Nonstandard |

According to the above Tables, it has been confirmed that the emulsion F has the antiviral performance.

### Industrial Applicability

The film-forming organopolysiloxane emulsion composition of the present invention can provide: a film-forming silicone emulsion composition that has favorable film formability, excellent strength of a film after cured, and favorable storage stability of the emulsion; and a film. Moreover, the film-forming organopolysiloxane emulsion composition of the present invention can contain an extremely small amount of cyclic siloxanes, so that there is less concern that when heat treatment using the same is performed onto a substrate, etc., the evaporated cyclic siloxanes contaminate the inside of an apparatus, or the cyclic siloxanes, silicon dioxide powder derived from the cyclic siloxanes, and the like contaminate a product itself. Therefore, the film-forming organopolysiloxane emulsion composition of the present invention is industrially useful and highly versatile, which enables wide application to fiber treatment agents as well as mold releasing agents, water repellent agents, cosmetics, hair cosmetics, etc.

The present description includes the following embodiments.
[1]: A film-forming organopolysiloxane emulsion composition comprising:
   (A) organopolysiloxane represented by the following average composition formula (1), the organopolysiloxane having a viscosity at 25°C of 300,000 mPa·s or more and containing at least two alkoxy groups or hydroxy groups each bonded to a silicon atom per molecule: 100 parts by mass, 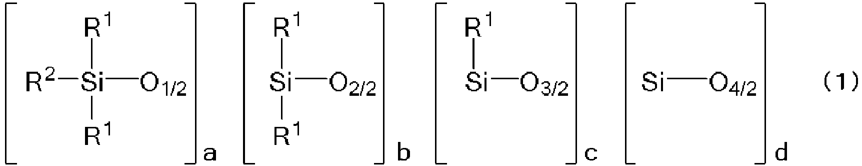 wherein R¹ each independently represents a hydrogen atom or an unsubstituted or substituted monovalent organic group having 1 to 20 carbon atoms; R² represents an unsubstituted or substituted alkyl group having 1 to 20 carbon atoms, aryl group having 6 to 20 carbon atoms, alkoxy group having 1 to 20 carbon atoms, or a hydroxy group; "a" represents an integer of 2 to 1,000, "b" represents an integer of 10 to 10,000, "c" represents an integer of 0 to 1,000, "d" represents an integer of 0 to 1,000, and c+d is an integer of 0 to 2,000 such that the viscosity of the organopolysiloxane at 25°C satisfies the range of 300,000 mPa·s or more;
   (B) a cationic surfactant: 0.1 to 30 parts by mass;
   (C) water: 30 to 3,000 parts by mass; and
   (D) colloidal silica: 0.5 to 50 parts by mass.
[2]: The film-forming organopolysiloxane emulsion composition of the above [1], wherein the (B) cationic surfactant contains one or both of the following (B-1) and (B-2),
   (B-1) a cationic surfactant represented by Q¹₃(CH₃)N⁺·X⁻: 0 to 30 parts by mass,
   (B-2) a cationic surfactant represented by Q²_{α}(CH₃)_{4-α}N⁺·X⁻: 0 to 30 parts by mass,
      wherein Q¹ represents a same or different kind of monovalent organic group having 6 to 30 carbon atoms; Q² represents a monovalent organic group having 6 to 30 carbon atoms; X each independently represents a halogen atom or a monovalent carboxyl group having 1 to 6 carbon atoms; and "α" represents an integer of 1 or 2, provided that a total amount of (B-1) and (B-2) is 0.1 to 30 parts by mass.
[3]: The film-forming organopolysiloxane emulsion composition of the above [1] or [2], further comprising (E) a nonionic surfactant in an amount of 0.1 to 30 parts by mass relative to 100 parts by mass of the component (A).
[4]: The film-forming organopolysiloxane emulsion composition of the above [3], wherein the (E) nonionic surfactant is represented by the following formula,

   R³O(EO)ₚ(PO)_{q}H

   wherein R³ represents a linear or branched alkyl group having 8 to 30 carbon atoms; EO represents an ethylene oxide group and PO represents a propylene oxide group, EO and PO being optionally arranged randomly or in blocks; and "p" and "q" each independently represents an integer of 0 to 100, provided p+q>0.
[5]: The film-forming organopolysiloxane emulsion composition of any one of the above [1] to [4], wherein a particle surface of the (D) colloidal silica is treated with oxide of a metal other than silicon.
[6]: The film-forming organopolysiloxane emulsion composition of any one of the above [1] to [5], further comprising a salt consisting of a basic substance comprising one or both of ammonia and organic amine, and an acidic substance.
[7]: The film-forming organopolysiloxane emulsion composition of any one of the above [1] to [6], wherein the emulsion composition contains octamethylcyclotetrasiloxane (D4), decamethylcyclopentasiloxane (D5), and dodecamethylcyclohexasiloxane (D6) each in an amount of 1,000 ppm or less.
[8]: The film-forming organopolysiloxane emulsion composition of any one of the above [1] to [7], wherein the emulsion composition contains hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7),
   hexadecamethylcyclooctasiloxane (D8), octadecamethylcyclononasiloxane (D9), and eicosamethylcyclodecasiloxane (D10) in a total amount of 1,000 ppm or less.
[9]: The film-forming organopolysiloxane emulsion composition of any one of the above [1] to [8], wherein the emulsion composition comprises emulsion having an average particle size of 1 µm or less.
[10]: The film-forming organopolysiloxane emulsion composition of the above [9], wherein the emulsion composition comprises emulsion having an average particle size of 500 nm or less.
[11]: The film-forming organopolysiloxane emulsion composition of any one of the above [1] to [10], wherein the emulsion composition has 2.0 or more of an antiviral activity value Mv based on JIS L 1922.
[12]: A method for producing the film-forming organopolysiloxane emulsion composition of the above [1], comprising the steps of:
   (I) preparing an emulsion composition by emulsifying a mixture comprising:
      (A-1) organopolysiloxane with a terminal blocked with an alkoxy and/or a silanol group, the organopolysiloxane having a viscosity at 25°C of 300,000 mPa·s or less;
      (A-2) alkoxysilane represented by the following formula (3),

         R⁴ₑSi(OR⁵)₄₋ₑ (3)
      wherein R⁴ each independently represents a hydrogen atom or a substituted or unsubstituted monovalent organic group having 1 to 20 carbon atoms; R⁵ each independently represents a hydrogen atom or a substituted or unsubstituted monovalent organic group having 1 to 20 carbon atoms; and "e" represents 0 or 1,
      provided that a total amount of (A-1) and (A-2) is 100 parts by mass, and a ratio of (A-2) to (A-1) is 0 to 0.2;
      (B) a cationic surfactant: 0.1 to 30 parts by mass; and
      (C-1) water: 30 to 3,000 parts by mass;
   (II) further adding (C-2) water to an obtained emulsion composition as necessary, followed by performing polymerization in the presence of (F) a basic catalyst at 0 to 40°C for 1 to 150 hours and further neutralization; and
   (III) further adding 0.5 to 50 parts by mass of (D) colloidal silica, and (C-3) water as necessary,
      wherein the steps (II) and (III) are performed in any order or simultaneously after the step (I), and
      the (C) water is added to make a total amount of (C-1), (C-2), and (C-3) 30 to 3,000 parts by mass.
[13]: The method for producing the film-forming organopolysiloxane emulsion composition of the above [12], wherein one or both of ammonia and organic amine are used as the (F) basic catalyst.
[14]: The method for producing the film-forming organopolysiloxane emulsion composition of the above [12] or [13], wherein one or both of the following (B-1) and (B-2) are used as the (B) cationic surfactant:
   (B-1) a cationic surfactant represented by Q¹₃(CH₃)N⁺·X⁻: 0 to 30 parts by mass,
   (B-2) a cationic surfactant represented by Q²_{α}(CH₃)_{4-α} N⁺·X⁻: 0 to 30 parts by mass,
      wherein Q¹ represents a same or different kind of monovalent organic group having 6 to 30 carbon atoms; Q² represents a monovalent organic group having 6 to 30 carbon atoms; X each independently represents a halogen atom or a monovalent carboxyl group having 1 to 6 carbon atoms; and "α" represents an integer of 1 or 2, provided that a total amount of (B-1) and (B-2) is 0.1 to 30 parts by mass.
[15]: The method for producing the film-forming organopolysiloxane emulsion composition of any one of the above [12] to [14], further comprising adding (E) a nonionic surfactant in an amount of 0.1 to 30 parts by mass relative to 100 parts by mass of (A-1) and (A-2) in total in any of the steps (I) to (III).
[16]: The method for producing the film-forming organopolysiloxane emulsion composition of the above [15], wherein a nonionic surfactant represented by the following formula is used as the component (E),

   R³O(EO)ₚ(PO)_{q}H

   wherein R³ represents a linear or branched alkyl group having 8 to 30 carbon atoms; EO represents an ethylene oxide group and PO represents a propylene oxide group, EO and PO being optionally arranged randomly or in blocks; and "p" and "q" each independently represents an integer of 0 to 100, provided p+q>0.
[17]: The method for producing the film-forming organopolysiloxane emulsion composition of any one of the above [12] to [16], wherein colloidal silica with a particle surface thereof treated with oxide of a metal other than silicon is used as the component (D).
[18]: The method for producing the film-forming organopolysiloxane emulsion composition of any one of the above [12] to [17], wherein the component (A-1) to be used contains octamethylcyclotetrasiloxane (D4), decamethylcyclopentasiloxane (D5), and dodecamethylcyclohexasiloxane (D6) each in an amount of 1,000 ppm or less.
[19]: The method for producing the film-forming organopolysiloxane emulsion composition of any one of the above [12] to [18], wherein the emulsion composition contains octamethylcyclotetrasiloxane (D4), decamethylcyclopentasiloxane (D5), and dodecamethylcyclohexasiloxane (D6) each in an amount of 1,000 ppm or less.
[20]: The method for producing the film-forming organopolysiloxane emulsion composition of any one of the above [12] to [19], wherein the emulsion composition contains hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), hexadecamethylcyclooctasiloxane (D8), octadecamethylcyclononasiloxane (D9), and eicosamethylcyclodecasiloxane (D10) in a total amount of 1,000 ppm or less.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A film-forming organopolysiloxane emulsion composition comprising:
(A) organopolysiloxane represented by the following average composition formula (1), the organopolysiloxane having a viscosity at 25°C of 300,000 mPa·s or more and containing at least two alkoxy groups or hydroxy groups each bonded to a silicon atom per molecule: 100 parts by mass, 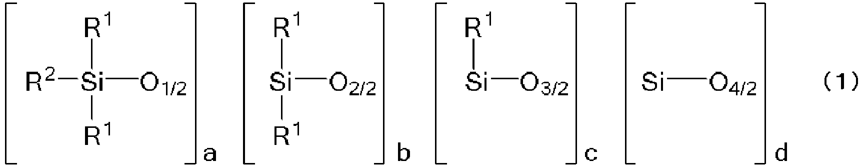 wherein R¹ each independently represents a hydrogen atom or an unsubstituted or substituted monovalent organic group having 1 to 20 carbon atoms; R² represents an unsubstituted or substituted alkyl group having 1 to 20 carbon atoms, aryl group having 6 to 20 carbon atoms, alkoxy group having 1 to 20 carbon atoms, or a hydroxy group; "a" represents an integer of 2 to 1,000, "b" represents an integer of 10 to 10,000, "c" represents an integer of 0 to 1,000, "d" represents an integer of 0 to 1,000, and c+d is an integer of 0 to 2,000 such that the viscosity of the organopolysiloxane at 25°C satisfies the range of 300,000 mPa·s or more;
(B) a cationic surfactant: 0.1 to 30 parts by mass;
(C) water: 30 to 3,000 parts by mass; and
(D) colloidal silica: 0.5 to 50 parts by mass.

2. The film-forming organopolysiloxane emulsion composition according to claim 1, wherein the (B) cationic surfactant contains one or both of the following (B-1) and (B-2),
(B-1) a cationic surfactant represented by Q¹₃(CH₃)N⁺·X⁻: 0 to 30 parts by mass,
(B-2) a cationic surfactant represented by Q²_{α}(CH₃)_{4-α}N⁺·X⁻: 0 to 30 parts by mass,
wherein Q¹ represents a same or different kind of monovalent organic group having 6 to 30 carbon atoms; Q² represents a monovalent organic group having 6 to 30 carbon atoms; X each independently represents a halogen atom or a monovalent carboxyl group having 1 to 6 carbon atoms; and "α" represents an integer of 1 or 2, provided that a total amount of (B-1) and (B-2) is 0.1 to 30 parts by mass.

3. The film-forming organopolysiloxane emulsion composition according to claim 1, further comprising (E) a nonionic surfactant in an amount of 0.1 to 30 parts by mass relative to 100 parts by mass of the component (A).

4. The film-forming organopolysiloxane emulsion composition according to claim 3, wherein the (E) nonionic surfactant is represented by the following formula,
R³O(EO)ₚ(PO)_{q}H
wherein R³ represents a linear or branched alkyl group having 8 to 30 carbon atoms; EO represents an ethylene oxide group and PO represents a propylene oxide group, EO and PO being optionally arranged randomly or in blocks; and "p" and "q" each independently represents an integer of 0 to 100, provided p+q>0.

5. The film-forming organopolysiloxane emulsion composition according to claim 1, wherein a particle surface of the (D) colloidal silica is treated with oxide of a metal other than silicon.

6. The film-forming organopolysiloxane emulsion composition according to claim 1, further comprising a salt consisting of a basic substance comprising one or both of ammonia and organic amine, and an acidic substance.

7. The film-forming organopolysiloxane emulsion composition according to claim 1, wherein the emulsion composition contains octamethylcyclotetrasiloxane (D4), decamethylcyclopentasiloxane (D5), and dodecamethylcyclohexasiloxane (D6) each in an amount of 1,000 ppm or less.

8. The film-forming organopolysiloxane emulsion composition according to claim 1, wherein the emulsion composition contains hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), hexadecamethylcyclooctasiloxane (D8), octadecamethylcyclononasiloxane (D9), and eicosamethylcyclodecasiloxane (D10) in a total amount of 1,000 ppm or less.

9. The film-forming organopolysiloxane emulsion composition according to claim 1, wherein the emulsion composition comprises emulsion having an average particle size of 1 µm or less.

10. The film-forming organopolysiloxane emulsion composition according to claim 9, wherein the emulsion composition comprises emulsion having an average particle size of 500 nm or less.

11. The film-forming organopolysiloxane emulsion composition according to claim 1, wherein the emulsion composition has 2.0 or more of an antiviral activity value Mv based on JIS L 1922.

12. A method for producing the film-forming organopolysiloxane emulsion composition according to claim 1, comprising the steps of:
(I) preparing an emulsion composition by emulsifying a mixture comprising:
(A-1) organopolysiloxane with a terminal blocked with an alkoxy and/or a silanol group, the organopolysiloxane having a viscosity at 25°C of 300,000 mPa·s or less;
(A-2) alkoxysilane represented by the following formula (3),
R⁴ₑSi(OR⁵)₄₋ₑ (3)
wherein R⁴ each independently represents a hydrogen atom or a substituted or unsubstituted monovalent organic group having 1 to 20 carbon atoms; R⁵ each independently represents a hydrogen atom or a substituted or unsubstituted monovalent organic group having 1 to 20 carbon atoms; and "e" represents 0 or 1,
provided that a total amount of (A-1) and (A-2) is 100 parts by mass, and a ratio of (A-2) to (A-1) is 0 to 0.2;
(B) a cationic surfactant: 0.1 to 30 parts by mass; and
(C-1) water: 30 to 3,000 parts by mass;
(II) further adding (C-2) water to an obtained emulsion composition as necessary, followed by performing polymerization in the presence of (F) a basic catalyst at 0 to 40°C for 1 to 150 hours and further neutralization; and
(III) further adding 0.5 to 50 parts by mass of (D) colloidal silica, and (C-3) water as necessary,
wherein the steps (II) and (III) are performed in any order or simultaneously after the step (I), and
the (C) water is added to make a total amount of (C-1), (C-2), and (C-3) 30 to 3,000 parts by mass.

13. The method for producing the film-forming organopolysiloxane emulsion composition according to claim 12, wherein one or both of ammonia and organic amine are used as the (F) basic catalyst.

14. The method for producing the film-forming organopolysiloxane emulsion composition according to claim 12, wherein one or both of the following (B-1) and (B-2) are used as the (B) cationic surfactant:
(B-1) a cationic surfactant represented by Q¹₃(CH₃)N⁺·X⁻: 0 to 30 parts by mass,
(B-2) a cationic surfactant represented by Q²_{α}(CH₃)_{4-α} N⁺·X⁻: 0 to 30 parts by mass,
wherein Q¹ represents a same or different kind of monovalent organic group having 6 to 30 carbon atoms; Q² represents a monovalent organic group having 6 to 30 carbon atoms; X each independently represents a halogen atom or a monovalent carboxyl group having 1 to 6 carbon atoms; and "α" represents an integer of 1 or 2, provided that a total amount of (B-1) and (B-2) is 0.1 to 30 parts by mass.

15. The method for producing the film-forming organopolysiloxane emulsion composition according to claim 12, further comprising adding (E) a nonionic surfactant in an amount of 0.1 to 30 parts by mass relative to 100 parts by mass of (A-1) and (A-2) in total in any of the steps (I) to (III).

16. The method for producing the film-forming organopolysiloxane emulsion composition according to claim 15, wherein a nonionic surfactant represented by the following formula is used as the component (E),
R³O(EO)ₚ(PO)_{q}H
wherein R³ represents a linear or branched alkyl group having 8 to 30 carbon atoms; EO represents an ethylene oxide group and PO represents a propylene oxide group, EO and PO being optionally arranged randomly or in blocks; and "p" and "q" each independently represents an integer of 0 to 100, provided p+q>0.

17. The method for producing the film-forming organopolysiloxane emulsion composition according to claim 12, wherein colloidal silica with a particle surface thereof treated with oxide of a metal other than silicon is used as the component (D).

18. The method for producing the film-forming organopolysiloxane emulsion composition according to claim 12, wherein the component (A-1) to be used contains octamethylcyclotetrasiloxane (D4), decamethylcyclopentasiloxane (D5), and dodecamethylcyclohexasiloxane (D6) each in an amount of 1,000 ppm or less.

19. The method for producing the film-forming organopolysiloxane emulsion composition according to claim 12, wherein the emulsion composition contains octamethylcyclotetrasiloxane (D4), decamethylcyclopentasiloxane (D5), and dodecamethylcyclohexasiloxane (D6) each in an amount of 1,000 ppm or less.

20. The method for producing the film-forming organopolysiloxane emulsion composition according to claim 12, wherein the emulsion composition contains hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), hexadecamethylcyclooctasiloxane (D8), octadecamethylcyclononasiloxane (D9), and eicosamethylcyclodecasiloxane (D10) in a total amount of 1,000 ppm or less.
